# EUROPÄISCHE PATENTANMELDUNG

(11) **EP 2 770 192 A2**
(43) Veröffentlichungstag der Anmeldung: **27.08.2014**
(21) Anmeldenummer: 14153079.0
(22) Anmeldetag: 29.01.2014
(51) Int. Cl.: F02N 7/00, B60K 6/12, F02B 63/00

(54) **Rückschlagventileinrichtung in der Saugseite eines bei gleicher Drehrichtung als Pumpe und Motor betreibbaren hydrostatischen Triebwerks**

(30) Priorität: 22.02.2013 DE 102013101796; 26.02.2013 DE 102013101868
(71) Anmelder: Linde Hydraulics GmbH & Co. KG, 63743 Aschaffenburg (DE)
(72) Erfinder: Krittian, Lukas, 63739 Aschaffenburg (DE); Langen, Dr., Alfred, 63762 Großostheim (DE)
(74) Vertreter: Geirhos, Johann

(57) **Zusammenfassung**

Die Erfindung betrifft ein Rückschlagventileinrichtung (30) eines hydrostatischen Triebwerks (7), das mit einem Verbrennungsmotor (2) trieblich verbunden ist und als Pumpe und Motor betreibbar ist, wobei das Triebwerk (7) im Pumpenbetrieb mit einer Saugseite (S) Druckmittel aus einem Behälter (9) ansaugt und in Förderseite (P) fördert und wobei das Triebwerk (7) im Motorbetrieb von über die Saugseite (S), die mit dem Behälter (9) in Verbindung steht, zugeführtem und unter Druck stehendem Druckmittel aus einem Druckmittelspeicher (20) angetrieben ist, wobei die Rückschlagventileinrichtung (30) in der Saugseite (S) des hydrostatischen Triebwerks (7) angeordnet ist, um im Motorbetrieb einen Druckaufbau an der Saugseite (S) zu erzielen. Erfindungsgemäß weist die Rückschlagventileinrichtung (30) ein mittels einer Betätigungseinrichtung (31) betätigbares Rückschlagventil (32) auf, wobei mittels der Betätigungseinrichtung (31) das Rückschlagventil (32) aktiv zwischen einer Absperrstellung (32a), in der eine Verbindung der Saugseite (S) mit dem Behälter (9) in Durchflussrichtung von der Saugseite (S) zum Behälter (9) absperrt ist, und einer Öffnungsstellung (32b) betätigbar ist, in der die Verbindung der Saugseite (S) mit dem Behälter (9) geöffnet ist.

## Beschreibung

Die Erfindung betrifft eine Rückschlagventileinrichtung eines hydrostatischen Triebwerks, das mit einem Verbrennungsmotor trieblich verbunden ist und als Pumpe und Motor betreibbar ist, wobei das Triebwerk im Pumpenbetrieb mit einer Saugseite Druckmittel aus einem Behälter ansaugt und in Förderseite fördert und wobei das Triebwerk im Motorbetrieb von über die Saugseite, die mit dem Behälter in Verbindung steht, zugeführtem und unter Druck stehendem Druckmittel aus einem Druckmittelspeicher angetrieben ist, wobei die Rückschlagventileinrichtung in der Saugseite des hydrostatischen Triebwerks angeordnet ist, um im Motorbetrieb einen Druckaufbau an der Saugseite zu erzielen.

Mobile selbstfahrende Arbeitsmaschinen, insbesondere Flurförderzeuge, Landmaschinen, Forstmaschinen und Baumaschinen, beispielsweise Bagger, Rad- und Teleskoplader, Schlepper, Mähdrescher, Feldhäcksler, Zuckerrüben- oder Kartoffelroder, weisen einen Antriebsstrang mit einem Verbrennungsmotor auf, der einen Fahrantrieb und ein Arbeitshydrauliksystem für die Arbeitsfunktionen der Arbeitsmaschine antreibt. Zur Versorgung des Arbeitshydrauliksystems ist mindestens eine von dem Verbrennungsmotor angetriebene Hydraulikpumpe vorgesehen.

Während eines Leerlaufbetriebs, in dem der Fahrantrieb und das Arbeitshydrauliksystem nicht betätigt sind und somit von dem Verbrennungsmotor keine Drehmomentanforderung angefordert wird, wird der Verbrennungsmotor auf einer unteren Leerlaufdrehzahl betrieben. Ein derartiger Leerlaufbetrieb findet in Arbeitspausen oder während Arbeitsunterbrechungen statt.

Um den Kraftstoffverbrauch während Arbeitspausen oder Arbeitsunterbrechungen zu verringern, ist es bereits bekannt, eine sogenannte Start-Stopp-Funktion für den Verbrennungsmotor vorzusehen, bei der der unbelastete Verbrennungsmotor in Arbeitspausen oder bei Arbeitsunterbrechungen abgeschaltet wird und bei einer Drehmomentanforderung durch eine Arbeitsfunktion oder den Fahrantrieb automatisch wieder gestartet wird. Das Abschalten und der nachfolgende Neustart des Verbrennungsmotors erfolgt hierbei auch bei relativ kurzen Leerlaufzeiten, so dass der Startvorgang des Verbrennungsmotors entsprechend häufig im Betrieb der Arbeitsmaschine auftritt. Dies stellt hohe Anforderungen an die Startereinrichtung des Verbrennungsmotors hinsichtlich der Dauerfestigkeit und der Bereitstellung der erforderlichen Startenergie zum Starten des Verbrennungsmotors.

Bei mobilen Arbeitsmaschinen werden daher hydrostatische Triebwerke als hydraulische Starter des Verbrennungsmotors für eine Start-Stopp-Funktion eingesetzt, die mit der Kurbelwelle des Verbrennungsmotors trieblich verbunden sind und mit Druckmittel aus einem vor dem Abstellen des Verbrennungsmotor aufgeladenen Druckmittelspeicher bei einem Startvorgang des Verbrennungsmotors betrieben werden. Aus der DE 10 2011 105 006 A1 ist ein Antriebsstrang bekannt, bei dem zusätzlich zu der Hydraulikpumpe des Arbeitshydrauliksystems ein weiterer Hydraulikmotor als Starter des Verbrennungsmotors für eine Start-Stopp-Funktion des Verbrennungsmotors vorgesehen ist. Da ein derartiger zusätzlicher Hydraulikmotor im Antriebsstrang im normalen Betrieb von dem laufenden Verbrennungsmotor mitgeschleppt wird, entstehen Verluste, die den Gesamtwirkungsgrad der Arbeitsmaschine herabsetzen. Zudem verursacht ein derartiger zusätzlicher Hydraulikmotor als Starter des Verbrennungsmotors zusätzlichen Bauaufwand und Bauraumbedarf.

Um den Aufwand für einen zusätzlichen Hydraulikmotor als hydraulischer Starter des Verbrennungsmotors zu vermeiden, ist es bei mobilen Arbeitsmaschinen mit einer Start-Stopp-Funktion bereits bekannt, die bereits vorhandene Hydraulikpumpe des Arbeitshydrauliksystems als hydraulischen Starter des Verbrennungsmotors zu nutzen, in dem die Hydraulikpumpe bei gleicher Drehrichtung und gleicher Flussrichtung des Druckmittels zusätzlich als Motor betrieben wird, der Druckmittel aus einem Druckmittelspeicher an der mit dem Behälter in Verbindung stehenden Saugseite zugeführt wird. Die Hydraulikpumpe des Arbeitshydrauliksystems ist in der Regel als eine im offenen Kreislauf betriebene Hydraulikpumpe ausgebildet, die mit einem Sauganschluss für das Druckmittel über eine Saugseite mit einem Behälter in Verbindung steht und das Druckmittel in eine an einen Förderanschluss angeschlossene Förderleitung fördert. Im Pumpenbetrieb, in dem die Hydraulikpumpe von dem laufenden Verbrennungsmotor angetrieben wird, saugt die Hydraulikpumpe Druckmittel über die Saugseite aus dem Behälter und fördert dieses zur Versorgung der Verbraucher des Arbeitshydrauliksystems in die Förderleitung. Sofern die Hydraulikpumpe an der Saugseite mit Druckmittel unter Druck aus einem Druckmittelspeicher beaufschlagt wird, arbeitet die Hydraulikpumpe bei gleicher Drehrichtung des hydrostatischen Triebwerks und gleicher Flussrichtung des Druckmittels als Motor, der es ermöglicht, an der Kurbelwelle des Verbrennungsmotors ein Drehmoment zum Starten des Verbrennungsmotors im Rahmen einer Start-Stopp-Funktion zu erzeugen und/oder bei laufendem Verbrennungsmotor ein Zusatzdrehmoment an die Kurbelwelle abzugeben, um den laufenden Verbrennungsmotor im Rahmen eines Booster-Antriebs zu entlasten und zu unterstützen.

Der Booster-Antrieb durch den Motorbetrieb der Hydraulikpumpe des Arbeitshydrauliksystems bei laufendem Verbrennungsmotor ermöglicht es, den Kraftstoffverbrauch des Verbrennungsmotors zu senken. Zudem kann durch den hydrostatischen Booster-Antrieb der Verbrennungsmotor in seiner Leistung verringert werden. Ein derartiges Downsizing des Verbrennungsmotors führt insbesondere bei der Einhaltung von gesetzlichen Abgasvorschriften des Verbrennungsmotors zu Vorteilen.

Um bei einem derartigen hydrostatischen Triebwerk, das bei gleicher Drehrichtung und gleicher Flussrichtung des Druckmittels als Pumpe und Motor betrieben wird, einen Motorbetrieb zu ermöglichen, ist es erforderlich, in der Saugseite des Triebwerks ein in Durchflussrichtung zum Behälter schließendes Rückschlagventil anzuordnen, das im Motorbetrieb geschlossen ist und dadurch einen Druckaufbau in der Saugseite ermöglicht und verhindert, dass das aus dem Druckmittelspeicher der Saugseite zugeführte Druckmittel zum Behälter abströmt.

Aus den Figuren 1, 2 der WO 2012/125798 A1 und der EP 2 308 795 A1 sind als Arbeitshydraulikpumpen ausgeführte hydrostatische Triebwerke bekannt, die im Pumpenbetrieb zur Versorgung der Verbraucher eines Arbeitshydrauliksystems dienen und bei gleichbleibender Drehrichtung im Motorbetrieb als hydraulischer Starter und/oder als Booster-Antrieb des Verbrennungsmotor eingesetzt werden können. Um im Motorbetrieb, wobei der mit einem Behälter in Verbindung stehenden Saugseite des hydrostatischen Triebwerks Druckmittel aus einem Druckmittelspeicher zugeführt wird, einen Druckaufbau zu erzielen, ist in der Saugseite ein in Richtung zum Behälter sperrendes Rückschlagventil angeordnet.

Die Hydraulikpumpe, beispielsweise eine Axialkolbenmaschine, des Arbeitshydrauliksystems ist in der Regel auf eine hohe Sauggrenzdrehzahl für den Pumpenbetrieb ausgelegt. Die im Pumpenbetrieb mit dem Behälter verbundene Saugseite und der Sauganschluss des hydrostatischen Triebwerks weist hierbei einen entsprechend großen Querschnitt auf. Bei den Figuren 1, 2 der WO 2012/125798 A1 und der EP 2 308 795 A1 ist das in der Saugseite des hydrostatischen Triebwerks angeordnete und in Richtung zum Behälter sperrende Rückschlagventil als übliches, druckbetätigtes Rückschlagventil, beispielsweise Kugelrückschlagventil, ausgebildet, das im Pumpenbetrieb des Triebwerks durch den entstehenden Saugdruck in der Saugseite in eine Öffnungsstellung aufgesteuert wird. Derartige übliche, druckbetätige Rückschlagventile stellen jedoch in der Öffnungsstellung während des Pumpenbetriebs des Triebwerks einen zusätzlichen hydraulischen Widerstand in der Saugseite dar und verursachen einen zusätzlichen Strömungswiderstand in der Saugseite des hydrostatischen Triebwerks, der zu zusätzlichen Druckverlusten in der Saugseite des hydrostatischen Triebwerks führt, die die Sauggrenzdrehzahl des Triebwerks im Pumpenbetrieb herabsetzten.

Der vorliegenden Erfindung liegt die Aufgabe zugrunde, eine in der Saugseite eines hydrostatischen Triebwerks, das bei gleicher Drehrichtung als Pumpe und Motor betreibbar ist, wobei dem Triebwerk im Motorbetrieb Druckmittel aus einem Druckmittelspeicher an der Saugseite zugeführt wird, angeordnete Rückschlagventileinrichtung zur Verfügung zu stellen, die im Pumpenbetrieb des Triebwerks bei geöffneter Rückschlagventileinrichtung die Sauggrenzdrehzahl des Triebwerks nicht beeinträchtigt.

Diese Aufgabe wird erfindungsgemäß dadurch gelöst, dass die Rückschlagventileinrichtung ein mittels einer Betätigungseinrichtung betätigbares Rückschlagventil aufweist, wobei mittels der Betätigungseinrichtung das Rückschlagventil aktiv zwischen einer Absperrstellung, in der eine Verbindung der Saugseite mit dem Behälter in Durchflussrichtung von der Saugseite zum Behälter absperrt ist, und einer Öffnungsstellung betätigbar ist, in der die Verbindung der Saugseite mit dem Behälter geöffnet ist. Ein mittels einer Betätigungseinrichtung aktiv zwischen einer Absperrstellung und einer Öffnungsstellung betätigbares Rückschlagventil weist gegenüber druckbetätigten Rückschlagventilen des Standes der Technik den Vorteil auf, dass das Rückschlagventil derart ausgeführt werden kann, dass das Rückschlagventil in der Öffnungsstellung keinen zusätzlichen hydraulischen Widerstand in der Saugseite darstellt und somit keinen zusätzlichen Strömungswiderstand in der Saugseite verursacht. Mit dem erfindungsgemäßen aktiv durch die Betätigungseinrichtung steuerbaren Rückschlagventil kann somit ein hydrostatisches Triebwerk, das im Pumpenbetrieb zur Versorgung eines Verbrauchers, beispielsweise eines Arbeitshydrauliksystem, dient, im Motorbetrieb als hydraulischer Starter des Verbrennungsmotors und/oder als Booster-Antrieb zur Unterstützung des Verbrennungsmotors eingesetzt werden, ohne im Pumpenbetrieb eine verringerte Sauggrenzdrehzahl aufzuweisen.

Gemäß einer bevorzugten Ausgestaltungsform der Erfindung ist das Rückschlagventil mittels der Betätigungseinrichtung im Pumpenbetrieb des Triebwerks in die Öffnungsstellung und im Motorbetrieb des Triebwerks in die Absperrstellung betätigbar. Mit der Betätigungseinrichtung wird es auf einfache Weise ermöglicht, das Rückschlagventil im Pumpenbetrieb aktiv in die Öffnungsstellung aufzusteuern, um einen Pumpenbetrieb des hydrostatischen Triebwerks ohne zusätzliche Strömungswiderstände in der Saugseite zu erzielen, und das Rückschlagventil für den Motorbetrieb des hydrostatischen Triebwerks aktiv in die Absperrstellung zu betätigen, um einen Antrieb des Triebwerks über das aus dem Druckmittelspeicher der Saugseite zugeführten Druckmittel zu ermöglichen.

Besondere Vorteile ergeben sich, wenn gemäß einer Ausgestaltungsform der Erfindung das Rückschlagventil mittels einer Federeinrichtung in die Absperrstellung betätigbar ist und das Rückschlagventil durch einen die Betätigungseinrichtung beaufschlagenden hydraulischen Betätigungsdruck in die Öffnungsstellung betätigbar ist. Mit einer derartigen hydrostatischen Steuerung der Betätigungseinrichtung und somit des Rückschlagventils kann eine einfache Steuerung und Betätigung des Rückschlagventils erzielt werden. Insbesondere werden weitere Vorteile erzielt, wenn der Betätigungsdruck lediglich bei laufendem Verbrennungsmotor erzeugt wird. Bei abgestelltem Verbrennungsmotor und nicht vorhandenem Betätigungsdruck wird somit das Rückschlagventil von der Federeinrichtung in die Absperrstellung betätigt, so dass bei der Verwendung des hydrostatischen Triebwerks als hydraulischer Starter des Verbrennungsmotor bei einem Startvorgang des Verbrennungsmotor unmittelbar der Motorbetrieb des Triebwerks erfolgen kann, ohne ein zeitlich vorheriges Betätigung des Rückschlagventils in die Absperrstellung durchführen zu müssen.

Gemäß einer bevorzugten Ausführungsform der Erfindung ist das in der Absperrstellung befindliche Rückschlagventil von dem in der Saugseite anstehenden Druck des Druckmittelspeichers in die Absperrstellung beaufschlagt. Hierdurch wird erzielt, dass das Rückschlagventil während der Dauer des Startvorgangs des Verbrennungsmotor von dem in der Saugseite anstehenden Druck des Druckmittelspeichers in der Absperrstellung gehalten wird und somit vermieden, dass das Rückschlagventil vor Ende des Startvorgangs von dem bei laufendem Verbrennungsmotor erzeugten Betätigungsdruck in die Öffnungsstellung betätigt wird.

Gemäß einer bevorzugten Ausgestaltungsform der Erfindung ist die Betätigungseinrichtung als mit dem Rückschlagventil in Wirkverbindung stehender Stellkolben ausgebildet. Mit einem Stellkolben kann auf einfache Weise eine aktive Betätigung des Rückschlagventils zwischen der Absperrstellung und der Öffnungsstellung erzielt werden.

Der Stellkolben ist gemäß einer zweckmäßigen Ausführungsform der Erfindung von der Federeinrichtung beaufschlagt und weist einen mit dem Betätigungsdruck beaufschlagbaren Kolbendruckraum auf, der der Federeinrichtung entgegenwirkt. Hierdurch kann mit geringem Bauaufwand erzielt werden, dass das Rückschlagventil von der Federeinrichtung in die Absperrstellung und mittels des Betätigungsdrucks in die Öffnungsstellung betätigt wird.

Zweckmäßigerweise ist die Federeinrichtung in einem federseitigen Kolbendruckraum des Stellkolbens angeordnet, der mit dem Behälter verbindbar ist. Bei anstehendem Betätigungsdruck kann somit der Stellkolben entgegen der Kraft der Federeinrichtung bewegt werden und dadurch das Rückschlagventil in die Öffnungsstellung betätigt werden.

Gemäß einer alternativen Ausgestaltungsform der Erfindung ist die Betätigungseinrichtung als an dem Rückschlagventil angeordnete, von dem hydraulischen Betätigungsdruck beaufschlagbare Steuerdruckfläche ausgebildet, die das Rückschlagventil in Richtung der Öffnungsstellung betätigt. Mit einer derartigen Steuerdruckfläche an dem Rückschlagventil kann auf einfache Weise eine aktive Betätigung des Rückschlagventils zwischen der Absperrstellung und der Öffnungsstellung erzielt werden und mit geringem Bauaufwand erzielt werden, dass das Rückschlagventil von der Federeinrichtungen in die Absperrstellung und mittels des Betätigungsdrucks in die Öffnungsstellung betätigt wird.

Gemäß einer vorteilhaften Ausführungsform der Erfindung ist das Rückschlagventil als Klappenventil mit einer verschwenkbaren Klappe ausgebildet, die mit der Betätigungseinrichtung in Wirkverbindung steht. Ein derartiges Klappenventil ermöglicht eine kompakte und platzsparende Bauweise des Rückschlagventils und kann mit geringem Bauaufwand mit einer als Stellkolben ausgebildeten Betätigungsrichtung betätigt werden. Bei einem Klappenventil wird zudem auf einfache Weise erzielt, dass das in der Absperrstellung befindliche Klappenventil bei einem Startvorgang des Verbrennungsmotors von dem an der Saugseite des Triebwerks anstehenden Druck des Druckmittelspeichers in der Absperrstellung gehalten wird.

Hierzu kann gemäß einer Ausgestaltungsform der Erfindung der Stellkolben unter Zwischenschaltung einer gelenkig an der Klappe und an dem Stellkoben angelenkten Koppelstange, insbesondere einer Schwinge, mit der Klappe in Wirkverbindung stehen. Mit einer gelenkig angelenkten Koppelstange kann auf einfache Weise durch die lineare Bewegung des Stellkolbens die verschwenkbare Klappe des Klappenventils betätigt werden.

Alternativ zu einer zwischengeschalteten Koppelstange kann gemäß einer weiteren Ausgestaltungsform der Erfindung der Stellkolben direkt mit der Klappe gelenkig verbunden sein, wobei die Gelenkverbindung ein Langloch umfasst. Sofern die Gelenkverbindung zwischen dem Stellkolben und der schwenkbaren Klappe ein Langloch umfasst, kann ebenfalls auf einfache Weise durch lineare Bewegung des Stellkolbens die verschwenkbare Klappe des Klappenventils betätigt werden.

Besondere Vorteile ergeben sich, wenn gemäß einer Ausführungsform der Erfindung die Klappe derart in einem Saugkanal schwenkbar angeordnet ist, dass die Klappe in der Öffnungsstellung nicht in den Saugkanal eintaucht. Hierdurch wird erzielt, dass die in der Öffnungsstellung befindliche Klappe keinen zusätzlichen hydraulischen Widerstand und somit keine zusätzlichen Strömungswiderstände in der Saugseite des Triebwerks während des Pumpenbetriebs verursacht.

Gemäß einer alternativen Ausführungsform der Erfindung ist das Rückschlagventil als Flachschieberventil mit einem längsverschiebbaren Schieber ausgebildet, der mit der Betätigungseinrichtung in Wirkverbindung steht. Ein derartiges Flachschieberventil ermöglicht ebenfalls eine kompakte und platzsparende Bauweise des Rückschlagventils und kann mit geringem Bauaufwand mit einer als Stellkolben oder als Steuerdruckfläche ausgebildeten Betätigungsrichtung betätigt werden. Zudem kann bei einem Flachschieberventil auf einfache Weise erzielt werden, dass der Schieber in der Öffnungsstellung keine zusätzlichen Strömungswiderstände in der Saugseite des Triebwerks während des Pumpenbetriebs verursacht.

Gemäß einer weiteren alternativen Ausführungsform der Erfindung ist das Rückschlagventil als Kolbenschieberventil mit einem längsverschiebbaren oder verdrehbaren Kolben ausgebildet, der mit der Betätigungseinrichtung in Wirkverbindung steht. Ein derartiges Kolbenschieberventil ermöglicht ebenfalls eine kompakte und platzsparende Bauweise des Rückschlagventils und kann mit geringem Bauaufwand mit einer als Stellkolben oder als Steuerdruckfläche ausgebildeten Betätigungsrichtung betätigt werden. Zudem kann bei einem Kolbenschieberventil auf einfache Weise erzielt werden, dass der bevorzugt zylindrische Kolben in der Öffnungsstellung keine zusätzlichen Strömungswiderstände in der Saugseite des Triebwerks während des Pumpenbetriebs verursacht.

Alternativ kann das Rückschlagventil als Kugelhahn mit einer verdrehbaren Kugel ausgebildet ist, die mit der Betätigungseinrichtung in Wirkverbindung steht. Ein Kugelhahn ermöglicht ebenfalls eine kompakte und platzsparende Bauweise des Rückschlagventils und kann mit geringem Bauaufwand mit einer als Stellkolben oder als Steuerdruckfläche ausgebildeten Betätigungsrichtung betätigt werden. Zudem kann bei einem Kugelhahn auf einfache Weise erzielt werden, dass die Kugel in der Öffnungsstellung keine zusätzlichen Strömungswiderstände in der Saugseite des Triebwerks während des Pumpenbetriebs verursacht.

Die Erfindung betrifft weiterhin ein hydrostatisches Triebwerk, das mit einem Verbrennungsmotor trieblich verbunden ist und als Pumpe und Motor betreibbar ist, wobei das Triebwerk im Pumpenbetrieb mit einer Saugseite Druckmittel aus einem Behälter ansaugt und in Förderseite fördert und wobei das Triebwerk im Motorbetrieb von über die Saugseite, die mit dem Behälter in Verbindung steht, zugeführtem und unter Druck stehendem Druckmittel aus einem Druckmittelspeicher angetrieben ist, wobei eine erfindungsgemäße Rückschlagventileinrichtung in der Saugseite des hydrostatischen Triebwerks angeordnet ist. Mit einer erfindungsgemäßen, in der Saugseite des Triebwerks angeordneten Rückschlagventileinrichtung, die aktiv mit der Betätigungseinrichtung zwischen der Absperrstellung und der Öffnungsstellung betätigbar ist, kann mit geringem Zusatzaufwand ein Motorbetrieb des Triebwerks erzielt werden, um das Triebwerk als hydraulischen Starter des Verbrennungsmotor bei einer Start-Stopp-Funktion und/oder als Booster-Antrieb zur Unterstützung des laufenden Verbrennungsmotors einzusetzen.

Die Saugseite des hydrostatischen Triebwerks kann hierbei als Saugkanal oder Saugleitung ausgebildet sein.

Gemäß einer Ausgestaltungsform der Erfindung ist die Rückschlagventileinrichtung in ein Gehäuse des Triebwerks eingebaut. Die Rückschlagventileinrichtung kann hierdurch mit geringem baulichen Aufwand in das Gehäuse des Triebwerks integriert werden und in dem im Gehäuse ausgebildeten Abschnitt des Saugkanals angeordnet werden.

Alternativ kann die Rückschlagventileinrichtung ein eigenständiges Gehäuse aufweisen. Hierdurch wird es auf einfache Weise ermöglicht, bei einem vorhandenen Triebwerk die erfindungsgemäße Rückschlagventileinrichtung zu ergänzen, um den zusätzlichen Motorbetrieb des Triebwerks für die Funktion des hydraulischen Starters und/oder die Funktion des Booster-Antriebs zu erzielen.

Das Gehäuse der Rückschlagventileinrichtung kann hierbei an das Gehäuse des Triebwerks angeflanscht werden. Sofern das Gehäuse der Rückschlagventileinrichtung derart ausgeführt ist, dass es an das Gehäuses des Triebwerks im Bereich des Sauganschlusses angeflanscht werden kann, kann mit geringem zusätzlichen Bauaufwand ein bereits vorhandenes Triebwerk mit der erfindungsgemäßen Rückschlagventileinrichtung versehen werden, um den zusätzlichen Motorbetrieb des Triebwerks für die Funktion des hydraulischen Starters und/oder die Funktion des Booster-Antriebs zu erzielen.

Sofern zur Steuerung der Verbindung des Druckmittelspeichers mit der Saugseite des Triebwerks für den Motorbetrieb ein Steuerventil vorgesehen ist, kann auf einfache Weise die Saugseite des Triebwerks im Motorbetrieb mit dem Druckmittelspeicher verbunden werden.

Das Triebwerk kann als im Verdrängervolumen konstantes Konstanttriebwerk ausgebildet.

Alternativ kann das Triebwerk als im Verdrängervolumen verstellbareres Verstelltriebwerk ausgebildet sein, wobei das Verdrängervolumen mittels einer Verdrängervolumenstelleinrichtung einstellbar ist, die mittels einer Stelleinrichtung betätigbar ist, wobei die Stelleinrichtung zur Versorgung mit Druckmittel an einen Speisedruckkreis angeschlossen und mit dem Druckmittelspeicher verbindbar ist. Eine hydraulische bzw. elektro-hydraulische Stelleinrichtung kann durch die Verbindung mit einem Speisedruckkreis und/oder dem Druckmittelspeicher auf einfache Weise mit Druckmittel zur Verstellung und Betätigung der Verdrängervolumenstelleinrichtung versorgt werden. Die Verbindung der Stelleinrichtung mit dem Druckmittelspeicher ermöglicht es auf einfache Weise, dass im Motorbetrieb des als hydraulischen Starter verwendeten Triebwerks die Verdrängervolumenstelleinrichtung des Triebwerks für den Startvorgang des abgestellten Verbrennungsmotors in Richtung des maximalem Verdrängervolumens mit Druckmittel aus dem geladenen Druckmittelspeicher verstellt werden kann, um durch das aus dem Druckmittelspeicher der Saugseite zuströmenden Druckmittels ein entsprechendes Drehmoment zum Starten des Verbrennungsmotors erzeugen zu können.

Mit besonderem Vorteil ist hierzu in der Verbindung der Stelleinrichtung mit dem Speisedruckkreis ein Sperrventil, insbesondere ein in Richtung zum Speisedruckkreis sperrendes Rückschlagventil, angeordnet. Mit einem derartigen Rückschlagventil kann auf einfache Weise bei einem Startvorgang des abgestelltem Verbrennungsmotors erzielt werden, dass lediglich die Stelleinrichtung des Triebwerks von dem Druckmittelspeicher mit Druckmittel versorgt wird und die weiteren Verbraucher des Speisedruckkreis von dem Druckmittelspeicher abgetrennt sind, so dass das in dem Druckmittelspeicher vorhandene Druckmittel in effektiver Weise für den Motorbetrieb des Triebwerks zur Verfügung steht.

Hierzu steht zweckmäßigerweise der Druckmittelspeicher mit der Saugseite des Triebwerks mittels einer Verbindungsleitung in Verbindung, in der das Steuerventil angeordnet ist, wobei zur Versorgung der Stelleinrichtung mit Druckmittel aus dem Druckmittelspeicher eine Druckmittelleitung vorgesehen ist, die zwischen dem Steuerventil und der Saugseite des Triebwerks an die Verbindungsleitung angeschlossen ist. Durch einen derartigen Anschluss der die Stelleinrichtung mit Druckmittel aus dem Druckmittelspeicher versorgenden Druckmittelleitung wird auf einfache Weise erzielt, dass bei einer entsprechenden Betätigung des Steuerventils in eine Durchflussstellung für den Motorbetrieb des Triebwerks bei einem Startvorgang des Verbrennungsmotors die Stelleinrichtung der Verdrängervolumenstelleinrichtung des Triebwerks ebenfalls mit Druckmittel versorgt wird, um ein Verstellen der Verdrängervolumenstelleinrichtung des Triebwerks in Richtung des maximalem Verdrängervolumens zu erzielen.

Mit besonderem Vorteil ist die Druckmittelleitung an eine von dem Speisedruckkreis zu der Stelleinrichtung geführte Stelldruckleitung angeschlossen, in der das Sperrventil angeordnet ist, wobei die Druckmittelleitung zwischen dem Sperrventil und der Stelleinrichtung an die Stelldruckleitung angeschlossen ist. Mit einem derartigen Anschluss der Druckmittelleitung an die mit dem Sperrventil versehene Stelldruckleitung wird auf einfache Weise erzielt, dass bei einem Startvorgang des Verbrennungsmotors lediglich die Stelleinrichtung des Triebwerks mit Druckmittel aus dem Druckmittelspeicher versorgt wird.

Zweckmäßigerweise ist in der Druckmittelleitung ein Druckminderventil angeordnet, wodurch mit geringem zusätzlichen Bauaufwand das in dem Druckmittelspeicher vorhandene Druckniveau auf das Niveau des Speisedrucks zur Versorgung der Stelleinrichtung des Triebwerks herabgesetzt werden kann.

Mit besonderem Vorteil ist der Speisedruck eines Speisedruckkreises als Betätigungsdruck der Betätigungseinrichtung des Rückschlagventils ausgebildet. Hierdurch kann auf einfache Weise und mit geringem Bauaufwand eine hydrostatische Betätigung der Betätigungseinrichtung und somit des Rückschlagventils erzielt werden. Hierzu ist zweckmäßigerweise eine von der Druckmittelleitung zu der Betätigungseinrichtung geführte Zweigleitung vorgesehen, wobei zwischen dem Druckminderventil und dem Anschluss der Zweigleitung ein Sperrventil, insbesondere ein in Richtung zum Druckminderventil sperrendes Rückschlagventil, angeordnet ist. Mit einer derartigen, von der Druckmittelleitung abzweigenden Zweigleitung wird erzielt, dass bei einem Startvorgang der über das Druckminderventil erzeugte Speisedruck in der Zweigleitung ansteht und nach dem Startvorgang bei laufendem Verbrennungsmotor der Speisedruck des Speisedruckkreises die Betätigungseinrichtung beaufschlagt, um das Rückschlagventil im Pumpenbetrieb in die Öffnungsstellung zu betätigen und in der Öffnungsstellung zu halten.

Gemäß einer Ausgestaltungsform der Erfindung ist der Kolbendruckraum des Stellkolbens mit dem Speisedruckkreis verbunden und ist der federseitige Kolbendruckraum des Stellkolbens zu dem Behälter entlastet. Mit einem derartigen Anschluss des Stellkolbens wird ohne zusätzliche Steuerventile und einer Steuerlogik eine Funktionalität des Rückschlagventils für die Verwendung des Triebwerks im Motorbetrieb als hydraulischen Starter des Verbrennungsmotors erzielt, bei der das Rückschlagventil bei abgestelltem Verbrennungsmotor mittels der Federeinrichtung in die Absperrstellung betätigt ist und bei laufendem Verbrennungsmotor von dem erzeugten Speisedruck des Speisedruckkreises in die Öffnungsstellung betätigt ist.

Gemäß einer alternativen Ausgestaltungsform der Erfindung ist die Steuerdruckfläche des Rückschlagventils mit dem Speisedruckkreis verbunden und ist eine weitere Steuerdruckfläche an dem Rückschlagventil ausgebildet, die das Rückschlagventil in Richtung der Absperrstellung betätigt, wobei die weitere Steuerdruckfläche zur Druckbeaufschlagung mit der Saugseite zwischen dem Triebwerk und dem Rückschlagventil verbindbar ist. Mit derartigen Steuerdruckflächen an dem Rückschlagventil wird ohne zusätzliche Steuerventile und einer Steuerlogik eine Funktionalität des Rückschlagventils für die Verwendung des Triebwerks im Motorbetrieb als hydraulischen Starter des Verbrennungsmotors erzielt, bei der das Rückschlagventil bei abgestelltem Verbrennungsmotor mittels der Federeinrichtung in die Absperrstellung betätigt ist und bei laufendem Verbrennungsmotor von dem erzeugten Speisedruck des Speisedruckkreises in die Öffnungsstellung betätigt ist. Mit der weiteren Steuerdruckfläche wird hierbei sichergestellt, dass das in der Absperrstellung befindliche Rückschlagventil bei einem Startvorgang des Verbrennungsmotors von dem an der Saugseite des Triebwerks anstehenden Druck des Druckmittelspeichers in der Absperrstellung gehalten wird.

Gemäß einer bevorzugten Weiterbildung der Erfindung ist zur Steuerung der Beaufschlagung der Betätigungseinrichtung ein Umschaltventil vorgesehen, mittels dem in einer ersten Schaltstellung das Rückschlagventil in Abhängigkeit von dem Betätigungsdruck in die Öffnungsstellung betätigbar ist mittels dem in einer zweiten Schaltstellung das Rückschlagventil in die Absperrstellung betätigbar ist. In der ersten Schaltstellung des Umschaltventils wird somit die Funktionalität des Rückschlagventils für die Verwendung des Triebwerks im Motorbetrieb als hydraulischen Starter des Verbrennungsmotors erzielt. In der zweiten Schaltstellung des Umschaltventils wird ermöglicht, bei laufendem Verbrennungsmotor das Rückschlagventil in die Absperrstellung zu betätigen, um eine Funktionalität des Rückschlagventils für die Verwendung des Triebwerks im Motorbetrieb als Booster-Antrieb bei laufendem Verbrennungsmotors zu erzielen.

Bei der Ausführung der Betätigungseinrichtung als Stellkolben ist hierzu in der ersten Schaltstellung des Umschaltventils der Kolbendruckraum des Stellkolbens mit dem Betätigungsdruck beaufschlagt und der federseitige Kolbendruckraum zu dem Behälter entlastet sowie in der zweiten Schaltstellung des Umschaltventils der federseitige Kolbendruckraum des Stellkolbens mit dem Betätigungsdruck beaufschlagt und der Kolbendruckraum zu dem Behälter entlastet. In der ersten Schaltstellung des Umschaltventils wird somit die Funktionalität des Rückschlagventils für die Verwendung des Triebwerks im Motorbetrieb als hydraulischen Starter des Verbrennungsmotors erzielt. In der zweiten Schaltstellung des Umschaltventils wird ermöglicht, bei laufendem Verbrennungsmotor das Rückschlagventil von dem den federseitigen Kolbendruckraum des Stellkolbens beaufschlagenden Speisedruck in die Absperrstellung zu betätigen, um eine Funktionalität des Rückschlagventils für die Verwendung des Triebwerks im Motorbetrieb als Booster-Antrieb bei laufendem Verbrennungsmotors zu erzielen.

Bei der Ausführung der Betätigungseinrichtung als Steuerdruckfläche kann die Funktionalität des Rückschlagventils für die Verwendung des Triebwerks im Motorbetrieb als hydraulischen Starter des Verbrennungsmotors auf einfache Weise erzielt werden, wenn in der ersten Schaltstellung des Umschaltventils die Steuerdruckfläche des Rückschlagventils mit dem Betätigungsdruck beaufschlagt ist und die weitere Steuerdruckfläche des Rückschlagventils mit der Saugseite zwischen dem Triebwerk und dem Rückschlagventil verbunden ist.

Gemäß einer Ausführungsform der Erfindung sind in der zweiten Schaltstellung des Umschaltventils die Steuerdruckfläche und die weitere Steuerdruckfläche des Rückschlagventils mit dem Betätigungsdruck beaufschlagt. In der zweiten Schaltstellung des Umschaltventils wird somit ermöglicht, bei laufendem Verbrennungsmotor das Rückschlagventil mittels der Federeinrichtung in die Absperrstellung zu betätigen, so dass die Funktionalität des Rückschlagventils für die Verwendung des Triebwerks im Motorbetrieb als Booster-Antrieb bei laufendem Verbrennungsmotors auf einfache Weise erzielt werden kann.

Gemäß einer alternativen Ausführungsform der Erfindung ist in der zweiten Schaltstellung des Umschaltventils die Steuerdruckfläche zu einem Behälter entlastet und die weitere Steuerdruckfläche mit dem Betätigungsdruck beaufschlagt. In der zweiten Schaltstellung des Umschaltventils wird somit erzielt, dass bei laufendem Verbrennungsmotor das Rückschlagventil von dem an der weiteren Steuerdruckfläche anstehenden Speisedruck in die Absperrstellung betätigt, so dass die Funktionalität des Rückschlagventils für die Verwendung des Triebwerks im Motorbetrieb als Booster-Antrieb bei laufendem Verbrennungsmotors auf einfache Weise erzielt werden kann.

Zweckmäßigerweise ist hierzu in der Absperrstellung des Rückschlagventils eine Verbindung der Saugseite mit dem Behälter in Durchflussrichtung vom Behälter zur Saugseite ermöglicht, insbesondere mittels eines Rückschlagventils, so dass das Triebwerk im Booster-Betrieb weiterhin mit der Saugseite Druckmittel aus dem Behälter ansaugen kann.

Hinsichtlich eines einfachen Aufbaus ergeben sich Vorteile, wenn das Steuerventil und/oder das Druckminderventil und/oder das Umschaltventil in dem Gehäuse der Rückschlagventileinrichtung angeordnet ist.

Zweckmäßigerweise sind das Steuerventil und/oder das Umschaltventil elektrisch betätigbar und stehen zur Ansteuerung mit einer elektronischen Steuereinrichtung in Wirkverbindung.

Sofern die elektronische Steuereinrichtung mit einer die Drehzahl des Verbrennungsmotors erfassenden Sensoreinrichtung und/oder einer den Druck des Druckmittelspeichers erfassenden Sensoreinrichtung in Verbindung steht, kann auf einfache Weise durch entsprechende Betriebsstrategien, die in der Steuereinrichtung hinterlegt sind, der Motorbetrieb des Triebwerks für die Funktion als hydraulischer Starter des Verbrennungsmotors und/oder für die Funktion als Booster-Antrieb des Verbrennungsmotors durch entsprechende Ansteuerung des Schaltventils und des Umschaltventils gesteuert werden.

Die Erfindung betrifft weiterhin ein hydrostatisches Antriebssystem mit einem erfindungsgemäßen hydrostatischen Triebwerk, das mit einem Verbrennungsmotor trieblich verbunden ist, wobei das hydrostatische Triebwerk bei gleicher Drehrichtung als Pumpe und Motor betreibbar ist, im Pumpenbetrieb das Triebwerk zur Versorgung zumindest eines Verbrauchers, insbesondere eines Arbeitshydrauliksystems, dient, und im Motorbetrieb als hydraulischer Starter einer Start-Stopp-Funktion des Verbrennungsmotor und/oder als hydraulischer Booster-Antrieb bei laufendem Verbrennungsmotor dient. Mit der erfindungsgemäßen Rückschlagventileinrichtung kann in einem Antriebssystem mit einem als Arbeitshydraulikpumpe eingesetzten Triebwerk das Triebwerk auf einfache Weise und ohne die Sauggrenzdrehzahl im Pumpenbetrieb herabzusetzen im Motorbetrieb mit Druckmittel aus einem Druckmittelspeicher betrieben werden, so dass eine Start-Stopp-Funktion und/oder ein Booster-Antrieb durch den Motorbetrieb der bereits im Antriebsstrang vorhandenen Arbeitshydraulikpumpe in einer verlustarmen, robusten, kostengünstigen und baulich einfachen Weise erzielt werden kann.

Zweckmäßigerweise ist hierzu für die Start-Stopp-Funktion des Verbrennungsmotor bei abgestelltem Verbrennungsmotor das Rückschlagventil mittels der Federeinrichtung in die Absperrstellung betätigt und nach dem Startvorgang des Verbrennungsmotor durch den Motorbetrieb des hydrostatischen Triebwerks das Rückschlagventil durch den an der Betätigungseinrichtung anstehenden, bei laufendem Verbrennungsmotor erzeugten hydraulischen Betätigungsdruck in die Öffnungsstellung betätigbar. Für die Verwendung des Triebwerks als hydraulischen Starter des Verbrennungsmotors wird somit auf einfache Weise erzielt, dass sich das Rückschlagventil bei abgestelltem Verbrennungsmotor und somit nicht vorhandenem Betätigungsdruck in der Absperrstellung befindet, so dass unmittelbar über das Steuerventil der Motorbetrieb des Triebwerks zum Starten des Verbrennungsmotors eingeleitet werden kann ohne zeitlich vorher das Rückschlagventil in die geschlossene Absperrstellung bringen zu müssen. Nach abgeschlossenem, erfolgreichem Start des Verbrennungsmotors, wobei bereits während des Startvorgangs der Betätigungsdruck erzeugt wird, wird das Rückschlagventil automatisch in die Öffnungsstellung betätigt, um im Pumpenbetrieb des Triebwerks die Verbraucher des Arbeitshydrauliksystems mit Druckmittel versorgen zu können.

Für den Booster-Antrieb bei laufendem Verbrennungsmotor ist zweckmäßigerweise das Rückschlagventil durch den hydraulischen Betätigungsdruck für die Dauer des Booster-Antriebs in die Absperrstellung betätigbar.

Die Erfindung betrifft weiterhin ein Fahrzeug, insbesondere eine mobile Arbeitsmaschine mit einem erfindungsgemäßen hydrostatischen Antriebssystem. Mit der erfindungsgemäßen Rückschlagventileinrichtung kann bei einem Fahrzeug mit der bereits vorhandenen Arbeitshydraulikpumpe eine Start-Stopp-Funktion und/oder ein Booster-Antrieb des Verbrennungsmotors auf einfache Weise mit der bereits vorhandenen Arbeitshydraulikpumpe erzielt werden.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform der Erfindung,
- Figur 2: eine zweite Ausführungsform der Erfindung,
- Figur 3: eine dritte Ausführungsform der Erfindung,
- Figur 4: eine Weiterbildung der Erfindung gemäß der Figur 1,
- Figur 5: eine Weiterbildung der Erfindung gemäß der Figur 3 und
- Figur 6: eine weitere Weiterbildung der Erfindung gemäß der Figur 3.

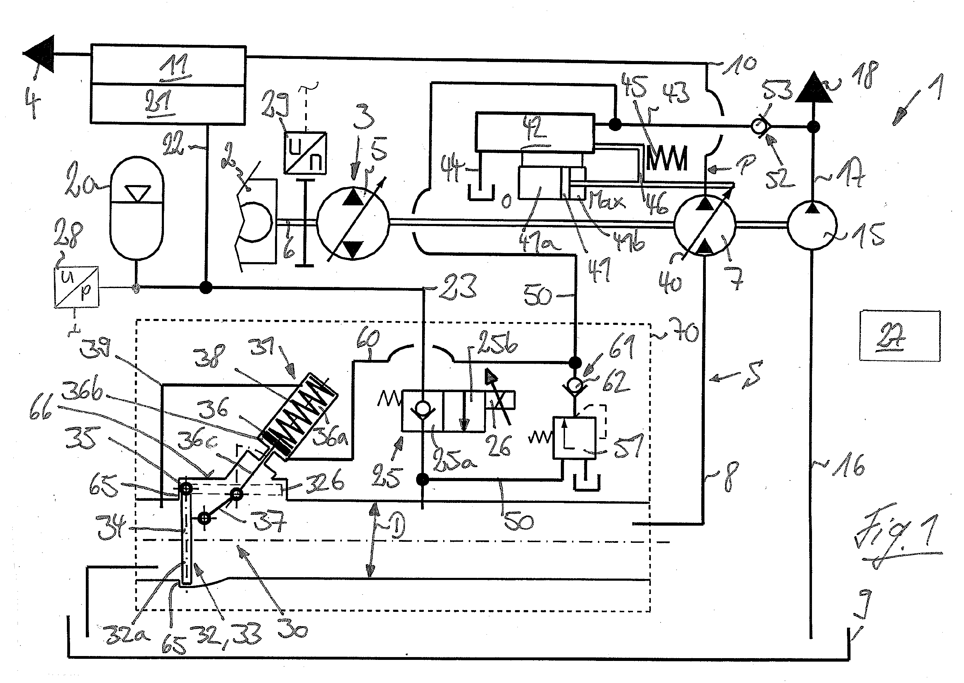

In der Figur 1 ist ein Schaltplan eines erfindungsgemäßen hydrostatischen Antriebssystems 1 und Antriebsstrangs eines nicht näher dargestellten Fahrzeugs, beispielsweise einer als Flurförderzeug oder Bau- bzw. Landmaschine ausgebildeten mobilen Arbeitsmaschine, in einer Prinzipdarstellung dargestellt.

Das erfindungsgemäße Antriebssystem 1 umfasst einen Verbrennungsmotor 2, beispielsweise einen Dieselmotor, einen von dem Verbrennungsmotor 2 angetriebenen Fahrantrieb 3 sowie ein von dem Verbrennungsmotor 2 angetriebenes Arbeitshydrauliksystem 4.

Der Fahrantrieb 3 ist im dargestellten Ausführungsbeispiel als hydrostatischer Fahrantrieb ausgebildet, der aus einer im Fördervolumen stufenlos verstellbaren Fahrpumpe 5 als Primäreinheit besteht, die zum Antrieb mit einer Abtriebswelle 6 des Verbrennungsmotors 2 in trieblicher Verbindung steht. Die Fahrpumpe 5 steht mit einem oder mehreren im Schluckvolumen festen oder verstellbaren, nicht näher dargestellten Hydromotoren als Sekundäreinheiten, im geschlossenen Kreislauf in Verbindung, die auf nicht mehr dargestellte Weise mit den angetriebenen Rädern des Fahrzeugs in Wirkverbindung stehen.

Der Fahrantrieb 3 kann alternativ als elektrischer Fahrantrieb mit einem von dem Verbrennungsmotor 2 angetriebenen elektrischen Generator als Primäreinheit und einem oder mehreren elektrischen Fahrmotoren als Sekundäreinheiten gebildet werden. Zudem kann als Fahrantrieb ein mechanischer Fahrantrieb mit einem mechanischen Getriebe, beispielsweise einem Stufenschaltgetriebe oder einem Leistungsverzweigungsgetriebe oder einem Drehmomentwandlergetriebe vorgesehen werden.

Das Arbeitshydrauliksystem 4 umfasst Arbeitsfunktionen der Arbeitsmaschine, beispielsweise bei einem Flurförderzeug eine Arbeitshydraulik zum Betätigen eines Lastaufnahmemittels an einem Hubmast, bzw. bei einer beispielsweise als Bagger oder Radlader ausgebildeten Baumaschine die Arbeitsfunktionen der von einer Schaufel ausgebildeten Arbeitsausrüstung.

Das Arbeitshydrauliksystem 4 umfasst zur Versorgung der Arbeitsfunktionen und somit der Verbraucher mit Druckmittel ein hydrostatisches Triebwerk 7. Das Triebwerk 7 ist im offenen Kreislauf betrieben und steht zum Antrieb mit der Abtriebswelle 6 des Verbrennungsmotors 2 in trieblicher Verbindung.

Das Triebwerk 7 kann als im Verdrängervolumen konstantes Konstanttriebwerk ausgebildet werden. Im dargestellten Ausführungsbeispiel ist das Triebwerk 7 als Verstelltriebwerk mit einem stufenlos verstellbaren Verdrängervolumen ausgebildet, beispielsweise als Axialkolbenmaschine in Schrägscheibenbauweise.

Das im offenen Kreislauf betriebene Triebwerk 7 steht eingangsseitig an einem Sauganschluss mittels einer Saugleitung bzw. einem Saugkanal 8, die eine Saugseite S bilden, mit einem Behälter 9 in Verbindung. Eine ausgangsseitig mit dem Förderanschluss und der Förderseite P des Triebwerks 7 in Verbindung stehende Förderleitung 10 ist an eine Steuerventileinrichtung 11 angeschlossen, mittels der die nicht näher dargestellten hydraulischen Verbraucher des Arbeitshydrauliksystems 4 steuerbar sind. Die Steuerventileinrichtung 11 umfasst bevorzugt ein oder mehrere Wegeventile zur Betätigung der Verbraucher, zu denen auch eine hydraulische Lenkungseinrichtung des Fahrzeugs gehören kann.

Das Antriebssystem 1 umfasst weiterhin eine Speisepumpe 15, die zum Antrieb mit der Abtriebswelle 6 in Verbindung steht. Die Speisepumpe 15 ist im dargestellten Ausführungsbeispiel als Konstantpumpe mit einem konstanten Verdrängervolumen ausgebildet, die im offenen Kreislauf betrieben ist. Die Speisepumpe 15 steht hierzu mit der Saugseite über eine Ansaugleitung 16 mit dem Behälter 9 in Verbindung und fördert in eine an die Förderseile angeschlossene Speisedruckleitung 17, an die die entsprechenden Verbraucher eines Speisedruckkreises 18 angeschlossen sind, beispielsweise Verstelleinrichtungen zur Verstellung des Verdrängervolumens der Fahrpumpe 5 und des Triebwerks 7, eine Einspeisevorrichtung des hydrostatischen Fahrantriebs 3, eine Bremsanlage des Fahrzeugs und Vorsteuerventile für die Steuerventile des Arbeitshydrauliksystems 4. Bei laufendem Verbrennungsmotor 2 erzeugt die Speisepumpe 15 einen konstanten Speisedruck in dem Speisedruckkreis 18. Zur Absicherung des konstanten Speisedruckes in dem Speisedruckkreis 18 ist der Speisedruckleitung 17 eine nicht näher dargestellte Druckbegrenzungseinrichtung, beispielsweise ein Druckbegrenzungsventil, zugeordnet.

Bei dem erfindungsgemäßen Antriebsstrang 1 ist das hydrostatische Triebwerk 7 des Arbeitshydrauliksystems 4 als Zweiquadrantentriebwerk ausgebildet, das bei gleicher Drehrichtung und gleicher Durchflussrichtung des Druckmittels als Pumpe und Motor betreibbar ist.

Im Pumpenbetrieb, wobei das Triebwerk 7 von dem laufenden Verbrennungsmotor 2 abgetrieben wird, saugt das Triebwerk 7 über die Saugleitung 8 Druckmittel aus dem Behälter 9 an und fördert das Druckmittel in die Förderleitung 10 zur Versorgung der Verbraucher des Arbeitshydrauliksystems 4. Weiterhin dient das Triebwerk 7 im Pumpenbetrieb zum Laden eines hydraulischen Druckmittelspeichers 20, der über ein Ladeventil 21 und eine Ladeleitung 22 an die Förderleitung 10 anschließbar ist. Zum Laden des Druckmittelspeichers 20 kann hierbei das im Pumpenbetrieb arbeitende Triebwerk 7 wahlweise mit der beim Verzögern des Fahrzeugs aufzunehmenden kinetischen Energie des Fahrzeugs angetrieben werden oder primärseitig von dem laufenden Verbrennungsmotor 2 angetrieben werden.

Im Motorbetrieb des Triebwerks 7, in der das Triebwerk 7 als hydraulischer Starter einer Start-Stopp-Funktion zum Starten des Verbrennungsmotors 2 ausgebildet ist, wird das Triebwerk 7 an der Saugseite S mit Druckmittel aus dem Druckmittelspeicher 20 angetrieben.

Die Verbindung des Druckmittelspeichers 20 mit der Saugseite S des Triebwerks 7 für den Motorbetrieb des Triebwerks 7 ist mittels eines elektrisch betätigbaren Steuerventils 25 steuerbar. Das Steuerventil 25 weist eine Sperrstellung 25a und eine Durchflussstellung 25b auf, wobei die Sperrstellung 25a bevorzugt leckagedicht ausgeführt ist, mit einem in Richtung zum Triebwerk 7 sperrenden Sperrventil. Das Steuerventil 25 ist als elektrisch betätigbares Steuerventil, bevorzugt Schaltventil, ausgebildet, das mittels einer elektrischen Betätigungseinrichtung 26, beispielsweise einem Schaltmagnet, zwischen der Sperrstellung 25a und der Durchflussstellung 25b betätigbar ist.

Die Betätigungseinrichtung 26 steht zur Ansteuerung mit einer elektronischen Steuereinrichtung 27 in Verbindung. Zur Überwachung des Speicherladedrucks und somit des Speicherzustandes des Druckmittelspeichers 20 ist eine mit der Steuereinrichtung 27 in Verbindung stehende Drucksensoreinrichtung 28 vorgesehen. Weiterhin steht die elektronische Steuereinrichtung 27 mit einer die Drehzahl des Verbrennungsmotors 2 erfassenden Drehzahlsensoreinrichtung 29 in Verbindung. Die Steuereinrichtung 27 kann zudem das Ladeventil 21 für den Ladebetrieb des Druckmittelspeichers 20 ansteuern.

Das Steuerventil 25 ist in einer Verbindungsleitung 23 angeordnet, die von dem Druckmittelspeicher 20 zu der Saugleitung 8 geführt und an die Saugleitung 8 angeschlossen ist.

In der Saugleitung 8 des Triebwerks 7 ist zwischen dem Anschluss der Verbindungsleitung 23 und dem Behälter 9 eine erfindungsgemäße Rückschlagventileinrichtung 30 angeordnet, die im Motorbetrieb des Triebwerks 7 einen Druckaufbau an der Saugseite S ermöglicht. Die Rückschlagventileinrichtung 30 weist ein mittels einer Betätigungseinrichtung 31 betätigbares Rückschlagventil 32 auf. Mittels der Betätigungseinrichtung 31 ist das Rückschlagventil 32 aktiv zwischen einer in der Figur 1 dargestellten Absperrstellung 32a, in der die Verbindung der Saugseite S mit dem Behälter 9 in Durchflussrichtung von der Saugseite S zum Behälter 9 absperrt ist, und einer in der Figur 1 gestrichelt dargestellten Öffnungsstellung 32b betätigbar, in der die Verbindung der Saugseite S mit dem Behälter 9 geöffnet ist.

Das im dargestellten Ausführungsbeispiel als Verstelltriebwerk mit einem stufenlos veränderbarem Verdrängervolumen ausgebildete Triebwerk 7 weist zur Einstellung des Verdrängervolumens eine Verdrängervolumenstelleinrichtung 40 auf, beispielsweise eine in der Neigung verstellbare Schrägscheibe einer Axialkolbenmaschine in Schrägscheibenbauweise. Die Verdrängervolumenstelleinrichtung 40 umfasst zur Betätigung eine mit der Verdrängervolumenstelleinrichtung 40 in Wirkverbindung stehende Stellkolbeneinrichtung 41. Das erfindungsgemäße Triebwerk 7 ist als einseitig verstellbares Triebwerk ausgebildet, bei dem die Verdrängervolumenstelleinrichtung 40 ausgehend von einer Stellung mit minimalem Verdrängervolumen in eine Stellrichtung bzw. Schwenkrichtung auf eine Stellung mit maximalem Verdrängervolumen verstellbar ist. Die Stellkolbeneinrichtung 41 weist einen in Richtung des maximalen Verdrängervolumens wirkenden Stelldruckraum 41 a und einen in Richtung des minimalen Verdrängervolumens wirkenden Stelldruckraum 41 b auf.

Die Verdrängervolumenstelleinrichtung 40 ist mittels einer Stelleinrichtung 42 betätigbar. Die Stelleinrichtung 42 weist ein nicht näher dargestelltes Stellventil auf, mit dem die Beaufschlagung der Stelldruckräume 41 a, 41 b der Stellkolbeneinrichtung 41 der Verdrängervolumenstelleinrichtung 40 mit einem Stelldruck bzw. deren Entlastung zu dem Behälter 9 steuerbar ist.

Die Stelleinrichtung 42 ist zur Versorgung mit Druckmittel und zur Erzeugung eines Stelldruckes in den Stelldruckräumen 41 a bzw. 41 b über eine Stelldruckleitung 43 mit der Speisedruckleitung 17 und somit dem Speisedruckkreis 18 verbunden. Weiterhin weist die Stelleinrichtung 42 einen Anschluss an eine zu dem Behälter 9 geführte Behälterleitung 44 auf. Die Stelleinrichtung 42 ist bevorzugt elektrisch ansteuerbar und steht hierzu mit der elektronischen Steuereinrichtung 27 in Verbindung. In dem dargestellten Ausführungsbeispiel umfasst die Stelleinrichtung 42 ein Regelventil, wobei eine mechanische Rückmeldung und Rückführung 46 der Ist-Position der Verdrängervolumenstelleinrichtung 40 auf die Stelleinrichtung 42 vorgesehen ist. Weiterhin ist eine als Druckfeder ausgebildete Federeinrichtung 45 vorgesehen, die die Verdrängervolumenstelleinrichtung 40 in Richtung des minimalen Verdrängervolumens beaufschlagt, der durch einen entsprechenden Anschlag der Verdrängervolumenstelleinrichtung 40 begrenzt werden kann.

Um die Verdrängervolumenstelleinrichtung 40 bei einem Startvorgang der Start-Stopp-Funktion des abgestellten Verbrennungsmotors 2 durch den Motorbetrieb des Triebwerks 7 in Richtung der Stellung mit maximalem Verdrängervolumen zu beaufschlagen, ist die Stelleinrichtung 42 zusätzlich zur Versorgung mit Druckmittel und somit zur Erzeugung eines Stelldrucks an den Druckmittelspeicher 20 anschließbar. Hierzu ist eine von der Stelldruckleitung 43 zu der Verbindungsleitung 23 geführte Druckmittelleitung 50 vorgesehen. In der Druckmittelleitung 50 ist ein Druckminderventil 51 angeordnet. Die Druckmittelleitung 50 ist hierbei zwischen dem Steuerventil 25 und der Saugleitung 8 an die Verbindungsleitung 23 angeschlossen.

In der Verbindung der Stelleinrichtung 42 mit dem Speisedruckkreis 18 ist weiterhin ein Sperrventil 52 angeordnet. Die Druckmittelleitung 50 ist hierbei zwischen dem Sperrventil 52 und der Stelleinrichtung 42 an die Stelldruckleitung 43 angeschlossen. Das Sperrventil 52 ist im dargestellten Ausführungsbeispiel als in Richtung zur Stelleinrichtung 42 öffnendes Rückschlagventil 53 ausgebildet.

Das erfindungsgemäße, in der Saugleitung 8 angeordnete Rückschlagventil 32 der Figur 1 ist als Klappenventil 33 mit einer um eine Schwenkachse 35 verschwenkbaren Klappe 34 ausgebildet. Die Klappe 34 steht zur Betätigung mit der Betätigungseinrichtung 31 in Wirkverbindung.

Die Betätigungseinrichtung 31 des erfindungsgemäßen Rückschlagventils 32 ist als längsverschiebbarer Stellkolben 36 ausgebildet. Der Stellkolben 36 weist eine Kolbenstange 36c auf, die mit der Klappe 34 trieblich verbunden ist. In der Figur 1 steht hierzu die Kolbenstange 36c des Stellkolbens 36 unter Zwischenstellung einer gelenkig an der Klappe 34 und gelenkig an der Kolbenstange 36c des Stellkobens 36 angelenkten Koppelstange 37, beispielsweise einer Schwinge, mit der Klappe 34 in Wirkverbindung.

Der Stellkolben 36 ist in einem Zylindergehäuse längsverschiebbaren angeordnet, in dem ein den Stellkolben 36 in Richtung der dargestellten Absperrstellung 32a des Rückschlagventils 32 beaufschlagender Kolbendruckraum 36a und ein den Stellkolben 36 in Richtung der Öffnungsstellung 32b des Rückschlagventils 32 beaufschlagender Kolbendruckraum 36b ausgebildet sind. In dem Kolbendruckraum 36a ist eine den Stellkolben 36 und somit das Rückschlagventil 32 in die Absperrstellung 32a beaufschlagende Federeinrichtung 38 angeordnet, beispielsweise eine Druckfeder. Der mit der Federeinrichtung 38 versehene Kolbendruckraum 36a ist mittels einer Entlastungsleitung 39 mit dem Behälter 9 verbunden.

Das erfindungsgemäße Rückschlagventil 32 ist durch einen die Betätigungseinrichtung 31 beaufschlagenden hydraulischen Betätigungsdruck in die Öffnungsstellung 32b betätigbar. Im dargestellten Ausführungsbeispiel ist der Betätigungsdruck von dem konstanten Speisedruck des Speisedruckkreises 18 gebildet, wozu eine von der Druckmittelleitung 50 bzw. der Stelldruckleitung 43 abzweigende Zweigleitung 60 an den in Öffnungsrichtung wirkenden Kolbendruckraum 36b des Stellkolbens 36 angeschlossen ist. Zwischen dem in der Druckmittelleitung 50 angeordneten Druckminderventil 51 und dem Anschluss der Zweigleitung 60 ist ein Sperrventil 61 angeordnet, das im dargestellten Ausführungsbeispiel als ein in Richtung zum Druckminderventil 51 sperrendes Rückschlagventil 62 ausgebildet ist.

Die Klappe 34 des Klappenventils 33 steuert in der dargestellten Absperrstellung 32a einen Ventilsitz 65 an, der in der Saugleitung 8 ausgebildet ist, die hierzu zumindest im Bereich des Ventilsitzes 65 als Saugkanal ausgebildet ist.

Die Schwenkachse 35 der Klappe 34 ist in radialer Richtung außerhalb des Durchmessers D der Saugleitung 8 angeordnet, so dass die Klappe 34 in der Öffnungsstellung 32b und somit der offenen Schaltstellung nicht in die Saugleitung 8 eintaucht und in der Öffnungsstellung 32b keinen zusätzlichen hydraulischen Widerstand und somit Strömungswiderstand in der Saugleitung 8 verursacht. An der als Saugkanal ausgebildeten Saugleitung 8 ist hierzu eine radiale Erweiterung 66 ausgebildet, in die die Klappe 34 in der Öffnungsstellung 32b bevorzugt vollständig einschwenkt.

Die erfindungsgemäße Rückschlagventileinrichtung 30 kann in das Gehäuse des Triebwerks 7 eingebaut werden. Im dargestellten Ausführungsbeispiel weist die Rückschlagventileinrichtung 30 ein separates Gehäuse 70 auf, das einen Abschnitt der Saugleitung 8 bildet. In dem in der Figur 1 durch die gestrichelte Linie verdeutlichten Gehäuse 70 der Rückschlagventileinrichtung 30 kann weiterhin das Steuerventil 25 und das Druckminderventil 51 eingebaut werden. Das Gehäuse 70 kann hierbei bevorzugt an den Sauganschluss des Triebwerks 7 angeflanscht und somit angebaut werden. Alternativ kann dieses Gehäuses 70 getrennt von dem Triebwerk 7 an einer beliebigen Stelle der Saugleitung 8 innerhalb des Fahrzeugs eingebaut werden.

Das Antriebssystem 1 der Figur 1, bei dem das Triebwerk 7 im Motorbetrieb als hydraulischer Starter des Verbrennungsmotors 2 einer Start-Stopp-Funktion dient, arbeitet wie folgt:
Bei abgestelltem Verbrennungsmotor 2 und somit nicht angetriebener Speisepumpe 15 sowie in der Sperrstellung 25a befindlichem Steuerventil 25 bricht der in der Stelldruckleitung 43 und der an diese angeschlossenen Druckmittelleitung 50 anstehende Speisedruck und somit der im Kolbendruckraum 36b anstehende Betätigungsdruck des Stellkolbens 36 zusammen, so dass die Klappe 34 von dem mittels der Federeinrichtung 38 in schließender Richtung beaufschlagten Stellkolben 36 in die in der Figur 1 dargestellte Absperrstellung 32a beaufschlagt wird. Infolge des zusammenbrechenden Speisedrucks ist das Triebwerk 7 bei abgestelltem Verbrennungsmotor 2 auf die Stellung mit minimalem Verdrängervolumen eingestellt. In der Absperrstellung 32a wird die Klappe 34 von der Federeinrichtung 38 mit einer definierten Kraft gegen den Ventilsitz 65 gehalten. In der Absperrstellung 32a ist die Verbindung der Saugseite S des Triebwerks 7 in Durchflussrichtung zum Behälter 9 abgesperrt, so dass für den Startvorgang des Verbrennungsmotors 2 das Steuerventil 25 bei mit Druckmittel aufgeladenem Druckmittelspeicher 20 in die Durchflussstellung 25b betätigt wird und somit die Saugleitung 8 mit dem Druck des Druckmittelspeichers 20 für den Motorbetrieb des Triebwerks 7 beaufschlagt wird. In der Durchflussstellung 25b des Steuerventils 25 wird weiterhin über das Druckminderventil 51 die Stelleinrichtung 42 des Triebwerks 7 mit einem Speisedruck versorgt, so dass das Triebwerk 7 in Richtung des maximalen Verdrängervolumens verstellt werden kann. Das Sperrventil 52 in der Speisedruckleitung 43 stellt sicher, dass bei einem Startvorgang des Verbrennungsmotor 2 lediglich die Stelleinrichtung 42 des Triebwerks 7 über das Druckminderventil 51 mit einem Speisedruck aus dem Druckmittelspeicher 20 versorgt wird und verhindert, dass der über das Druckminderventil 51 aus dem Druckmittelspeicher 20 erzeugte Speisedruck die weiteren Verbraucher des Speisedruckkreises 18 während des Startvorgangs des Verbrennungsmotors 2 versorgt. Steigt das aus dem Verdrängervolumen und dem anstehenden Druck in der Saugseite S resultierende Drehmoment des Triebwerks 7 über das aus der Haftreibung der Abtriebswelle 6 und den daran angeschlossenen Aggregaten resultierende Drehmoment an, erfolgt ein Startvorgang des Verbrennungsmotors 2.

Über die Zweigleitung 60 steht hierbei der an dem Druckminderventil 51 erzeugte Speisedruck im Kolbendruckraum 36b des Stellkolbens 36 an und erzeugt eine in Richtung der Öffnungsstellung der Klappe 34 wirkende Kraft am Stellkolben 36. Die aus dem Druck des Druckmittelspeichers 20 und somit dem Druck in der Saugleitung 8 an der Klappe 34 in Richtung der Absperrstellung 32a wirkende Kraft überwiegt jedoch die öffnende Kraft am Stellkolben 36, so dass die Klappe 34 während des Startvorgangs des Verbrennungsmotors 2 und des Motorbetriebs des Triebwerks 7 in der Absperrstellung 32a gehalten wird.

Sofern mittels des Drehzahlsensors 29 eine auf einen erfolgreichen Startvorgang hinweisende Drehzahl erfasst wird, wird das Steuerventil 25 in die Sperrstellung 25a betätigt und hierdurch der Motorbetrieb des Triebwerks 7 beendet. Hierdurch bricht der auf die Klappe 34 in schließender Richtung wirkende Druck des Druckmittelspeichers 20 zusammen. Mit dem Startvorgang des Verbrennungsmotor 2 wird weiterhin über die angetriebene Speisepumpe 15 ein konstanter Speisedruck in der Speisedruckleitung 43 aufgebaut, der über die Druckmittelleitung 50 und die Zweigleitung 60 im Kolbendruckraum 36b des Stellkolbens 36 ansteht, so dass die Klappe 34 mittels des Stellkolbens 36 in die Öffnungsstellung 32b betätigt wird.

Bei in der Öffnungsstellung 32b befindlicher Klappe 34 kann das von dem Verbrennungsmotor 2 angetrieben Triebwerk 7 im Pumpenbetrieb zur Versorgung der Verbraucher des Arbeitshydrauliksystems 4 verwendet werden, wobei die in der Öffnungsstellung 32b befindliche Klappe 34 in der Saugleitung 8 keine zusätzlichen hydraulischen Wiederstand aufbaut und keine Strömungswiderstände verursacht, die die Sauggrenzdrehzahl des Triebwerks 7 im Pumpenbetrieb verringern.

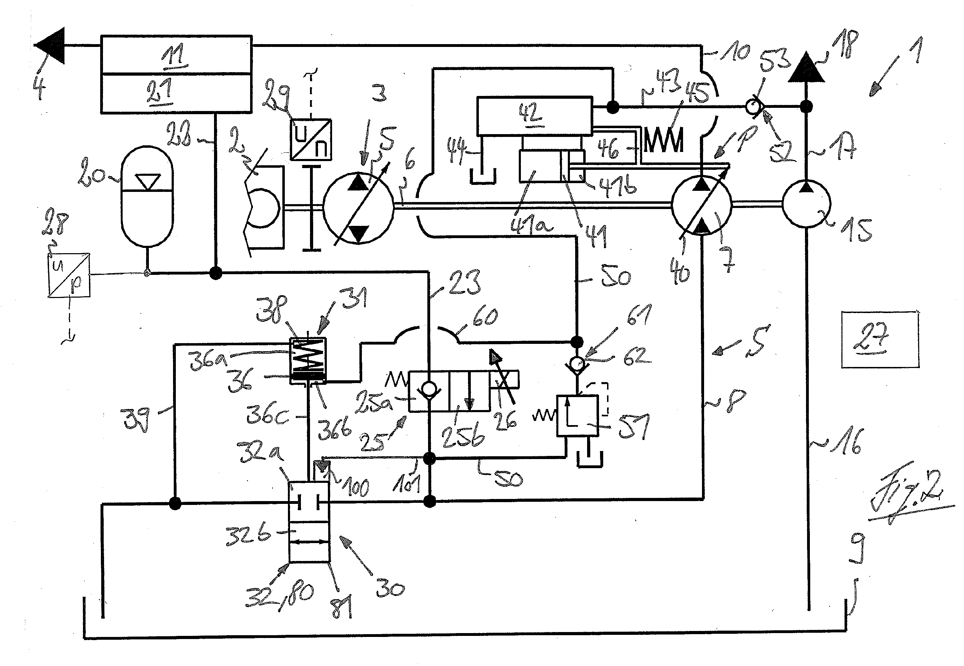

In der Figur 2 ist eine zweite Ausführungsform der Erfindung dargestellt. Gleiche Bauteile sind hierbei mit gleichen Bezugsziffern versehen.

Die Figur 2 unterscheidet sich von der Figur 1 hinsichtlich der konstruktiven Ausführungsform des erfindungsgemäßen Rückschlagventils 32. Das Rückschlagventil 32 der Figur 2 ist als Kolben- oder Flachschieberventil 80 mit einem längsverschiebbaren Kolben oder Schieber 81 ausgebildet, der zur Betätigung mit der Betätigungseinrichtung 31 in Wirkverbindung steht, die analog zu der Figur 1 aufgebaut ist. Der Kolben bzw. Schieber 81 ist mittels der Betätigungseinrichtung 31 durch den als Speisedruck ausgebildeten Betätigungsdruck in die Öffnungsstellung 32b und bei abgeschaltetem Verbrennungsmotor 2 mittels der Federeinrichtung 38 in die Absperrstellung 32a betätigbar.

Um das als Kolben- oder Flachschieberventil 80 ausgebildete Rückschlagventil 32 während die Dauer des Startvorgangs des Verbrennungsmotors 2 in der Absperrstellung 32a zu halten und zu vermeiden, dass das Rückschlagventil 32 vor dem Ende des Startvorgangs des Verbrennungsmotors 2 von dem erzeugten Speisedruck in der Zweigleitung 60 entgegen der Kraft der Federeinrichtung 38 in die Öffnungsstellung 32b betätigt wird, ist an dem Rückschlagventil 32 eine in Richtung der Absperrstellung 32a wirkende weitere Steuerdruckfläche 100 vorgesehen, die bei einem Startvorgang des Verbrennungsmotors 2 von dem Druck des Druckmittelspeichers 20 und somit dem Druck in der Saugleitung 8 beaufschlagt ist. Hierzu ist eine mit der Steuerdruckfläche 100 in Verbindung stehende Steuerdruckleitung 101 vorgesehen, die im dargestellten Ausführungsbeispiel an die Verbindungsleitung 23 zwischen dem Steuerventil 25 und die Saugleitung 8 angeschlossen ist.

Der Kolben bzw. Schieber 81 ist derart in der Saugleitung 8 angeordnet, dass dieser in der Öffnungsstellung 32b keinen zusätzlichen Strömungswiderstand in der Saugseite S für das von dem Triebwerk 7 im Pumpenbetrieb angesaugte Druckmittel bildet.

Alternativ zu einer Ausführung des Rückschlagventil 32 als Flachschieberventil 80 kann das Rückschlagventil 32 der Figur 2 als Kolbenschieberventil mit einem längsverschiebbaren und bevorzugt zylindrischen Kolben ausgebildet sein, der zur Betätigung mit der Betätigungseinrichtung 31 in Wirkverbindung steht. Zudem kann das Rückschlagventil als Kugelventil ausgebildet sein.

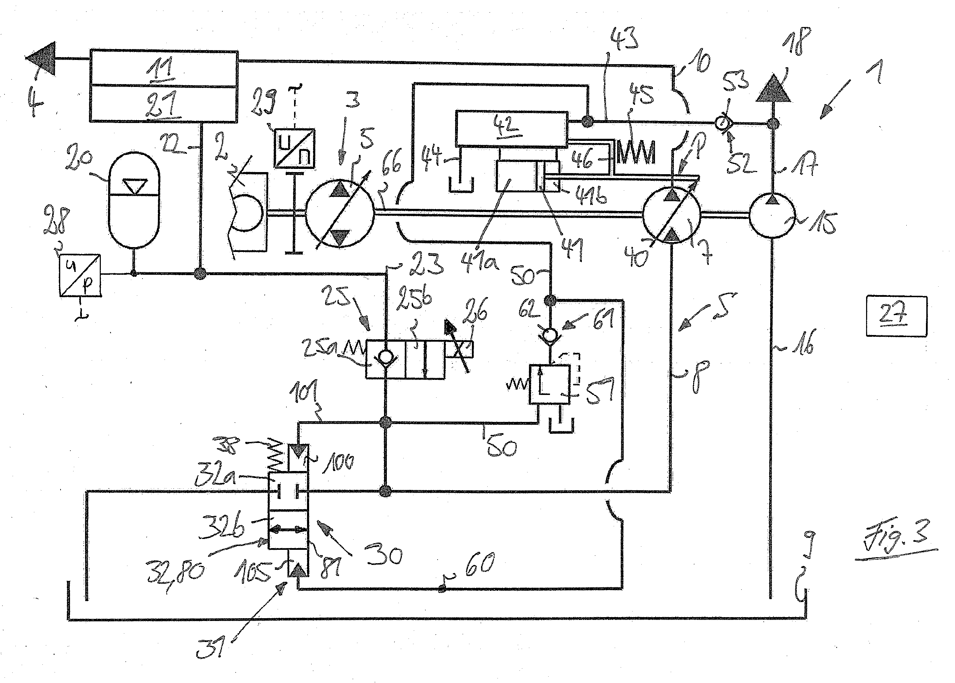

In der Figur 3 ist eine dritte Ausführungsform der Erfindung dargestellt. Gleiche Bauteile sind hierbei mit gleichen Bezugsziffern versehen.

Bei der Figur 3 ist das Rückschlagventil 32 analog der Figur 2 als Kolben- oder Flachschieberventil 80 mit einem längsverschiebbaren Kolben bzw. Schieber 81 ausgebildet, der zur Betätigung mit der Betätigungseinrichtung 31 in Wirkverbindung steht, die als in Richtung der Öffnungsstellung 32b wirkende Steuerdruckfläche 105 an dem Rückschlagventil 32 ausgebildet ist. Zur Beaufschlagung der Steuerdruckfläche 105 mit dem als Betätigungsdruck ausgebildeten Speisedruck ist die Steuerdruckfläche 105 mit der Zweigleitung 60 verbunden. In Richtung der Absperrstellung 32a ist das Rückschlagventil 32 von der Federeinrichtung 38 beaufschlagt. Weiterhin ist an dem Rückschlagventil 32 die in Richtung der Absperrstellung 32a wirkende weitere Steuerdruckfläche 100 vorgesehen, die mit der Steuerdruckleitung 101 in Verbindung steht, um das Rückschlagventil 32 bei einem Startvorgang des Verbrennungsmotors 2 von dem Druck des Druckmittelspeichers 20 und somit dem Druck in der Saugleitung 8 in der Absperrstellung 32a zu halten und zu vermeiden, dass das Rückschlagventil 32 vor dem Ende des Startvorgangs des Verbrennungsmotors 2 von dem erzeugten Speisedruck entgegen die Kraft der Federeinrichtung 38 in die Öffnungsstellung 32b betätigt wird.

Bei abgestelltem Verbrennungsmotor 2 und somit nicht angetriebener Speisepumpe 15 sowie in der Sperrstellung 25a befindlichem Steuerventil 25 bricht der in der Stelldruckleitung 43 und der an diese angeschlossenen Druckmittelleitung 50 anstehende Speisedruck zusammen, der die Steuerdruckfläche 105 beaufschlagt, so dass das Rückschlagventil 32 von der Federeinrichtung 38 in die Absperrstellung 32a beaufschlagt wird. Für den Startvorgang des Verbrennungsmotors 2 wird das Steuerventil 25 bei mit Druckmittel aufgeladenem Druckmittelspeicher 20 in die Durchflussstellung 25b betätigt, so dass bei in der Absperrstellung 32a befindlichem Rückschlagventil 32 der Verbrennungsmotor 2 durch den Motorbetrieb des Triebwerks 7 gestartet werden kann.

Während der Dauer des Startvorgangs steht der Druck des Druckmittelspeichers 20 und somit der Druck in der Saugleitung 8 an der weiteren Streuerdruckfläche 100 an, wodurch das Rückschlagventil 32 in der Absperrstellung 32a gehalten wird und ein Öffnen des Rückschlagventils 32 von dem an der Steuerdruckfläche 105 anstehenden Speisedruck vermieden wird.

Nach dem Startvorgang des Verbrennungsmotors 2 wird das Steuerventil 25 in die Sperrstellung 25a betätigt, so dass der an der weiteren Steuerdruckfläche 100 anstehende, in schließender Richtung wirkende Druck des Druckmittelspeichers 20 zusammenbricht. Der von der angetriebenen Speisepumpe 15 erzeugte Speisedruck steht über die Zweigleitung 60 an der Streuerdruckfläche 105 an, wodurch das Rückschlagventil 32 mittels der als Steuerdruckfläche 105 ausgebildeten Betätigungseinrichtung 31 in die Öffnungsstellung 32b betätigt wird.

Bei den Ausführungsbeispielen der Figuren 1 und 2 ist der federseitige, in Absperrstellung 32a wirkende Kolbendruckraum 36a des Stellkolbens 36 über die Entlastungsleitung 39 zum Behälter entlastet und der in Öffnungsstellung 32b wirkende Kolbendruckraum 36b des Stellkolbens 36 über die Zweigleitung 60 mit dem als Speisedruck ausgebildeten Betätigungsdruck beaufschlagbar, um durch den Motorbetrieb des Triebwerks 7 einen hydraulischen Starter für eine Start-Stopp-Funktion des abgestellten Verbrennungsmotors 2 zu erzielen.

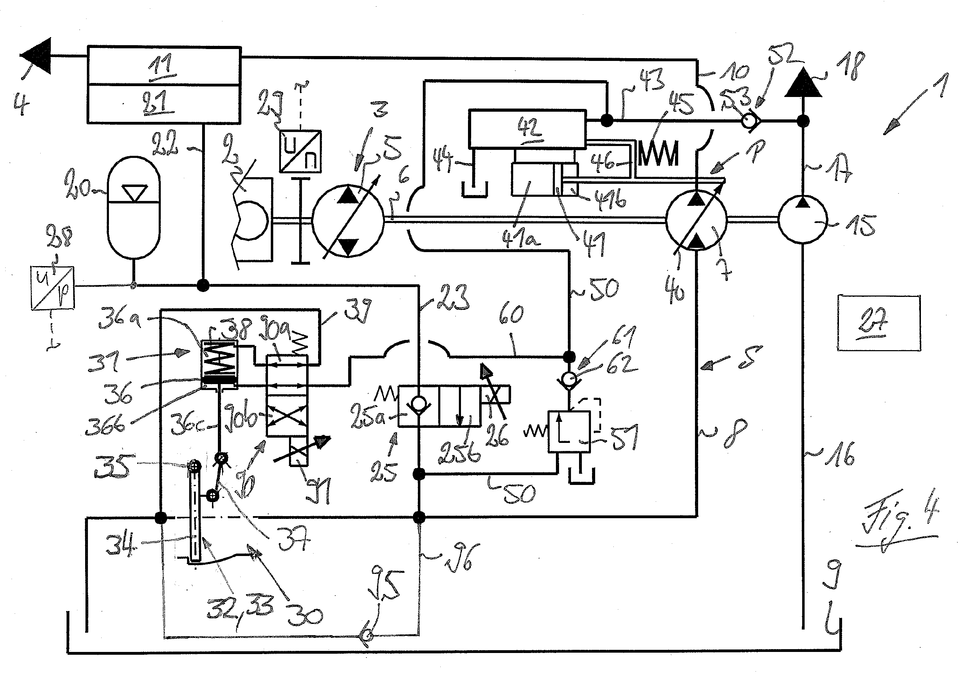

In der Figur 4 ist eine Weiterbildung der Figur 1 dargestellt, wobei gleiche Bauteile mit gleichen Bezugsziffern versehen sind. Bei der Figur 4 ist zur Steuerung der Beaufschlagung der Betätigungseinrichtung 31 ein Umschaltventil 90 vorgesehen, mittels dem in einer ersten Schaltstellung 90a das Rückschlagventil 32 in Abhängigkeit von dem Betätigungsdruck in die Öffnungsstellung 32b betätigbar ist und mittels dem in einer zweiten Schaltstellung 90b das Rückschlagventil 32 in die Absperrstellung 32a betätigbar ist. Bei der Figur 4 ist hierzu zur Steuerung der Beaufschlagung der Kolbendruckräume 36a, 36b des Stellkolbens 36 das Umschaltventil 90 vorgesehen, mittels dem in einer ersten Schaltstellung 90a der in Öffnungsstellung 32b wirkende Kolbendruckraum 36b des Stellkolbens 36 mit dem Betätigungsdruck beaufschlagt ist und der federseitige, in Absperrstellung 32a wirkende Kolbendruckraum 36a zu dem Behälter 9 entlastet ist und in einer zweiten Schaltstellung 90b der federseitige, in Absperrstellung 32a wirkende Kolbendruckraum 36a des Stellkolbens 36 mit dem Betätigungsdruck beaufschlagt ist und der in Öffnungsstellung 32b wirkende Kolbendruckraum 36b zu dem Behälter 9 entlastet ist.

Das Umschaltventil 90 steht hierzu mit der den Betätigungsdruck führenden Zweigleitung 60, der Entlastungsleitung 39 und den beiden Kolbendruckräumen 36a, 36b des Stellkobens 36 in Verbindung. Das Umschaltventil 90 ist als Vier-Anschluss-Zwei-Stellungs-Ventil ausgeführt.

Das Umschaltventil 90 ist als elektrisch betätigbares Steuerventil, bevorzugt Schaltventil, ausgebildet, das mittels einer elektrischen Betätigungseinrichtung 91, beispielsweise einem Schaltmagnet, zwischen den Schaltstellungen 90a, 90b betätigbar ist. Zur Ansteuerung steht das Umschaltventil 90 mit der elektronischen Steuereinrichtung 27 in Wirkverbindung.

Sofern für die Rückschlagventileinrichtung 30 gemäß der Figur 1 ein separates Gehäuse 70 vorgesehen ist, ist bevorzugt das Umschaltventil 90 in das Gehäuse 70 eingebaut.

In der Schaltstellung 90a des Umschaltventils 90 ergibt sich die bereits oben beschriebene Betätigung des Rückschlagventils 32 gemäß der Figur 1 für die Verwendung des Triebwerks 7 im Motorbetrieb als hydraulischer Starter im Rahmen einer Start-Stopp-Funktion des Verbrennungsmotors 2.

Die Schaltstellung 90b des Umschaltventils 90 ermöglicht die umgekehrte Ansteuerung des Rückschlagventils 32, um durch den Motorbetrieb des hydrostatischen Triebwerks 7 bei laufendem Verbrennungsmotor 2 ein zusätzliches Drehmoment an die Abtriebswelle 6 des Verbrennungsmotors 2 abzugeben und einen Booster-Antrieb zu erzielen. Mit dem Booster-Antrieb durch das hydrostatische Triebwerk 7 kann der Verbrennungsmotor 2 beispielsweise im Fahrbetrieb des Fahrzeugs unterstützt werden.

Für den Booster-Antrieb wird das Umschaltventil 90 in die Schaltstellung 90b betätigt, so dass der bei laufendem Verbrennungsmotor 2 von der angetriebenen Speisepumpe 15 erzeugte Speisedruck über die Stelldruckleitung 43, die Druckmittelleitung 50 und die Zweigleitung 60 in dem federseitigen, in Richtung der Absperrstellung 32a des Rückschlagventils 32 wirkenden Kolbendruckraum 36a des Stellkolbens 36 ansteht. Da in der Schaltstellung 90b des Umschaltventils 90 der in Öffnungsstellung 32b wirkende Kolbendruckraum 36b des Stellkolbens 36 zum Behälter 9 entlastet ist, kann bei laufendem Verbrennungsmotor 2 das Rückschlagventil 32 in die Absperrstellung 32a betätigt werden, um die Verbindung der Saugleitung 8 in Strömungsrichtung zum Behälter 9 abzusperren. Durch Ansteuerung des Steuerventils 25 in die Durchflussstellung 25b kann somit das Triebwerk 7 mit unter Druck stehendem Druckmittel aus dem Druckmittelspeicher 20 im Motorbetrieb angetrieben werden, um ein Drehmoment in den Antriebsstrang zur Unterstützung des laufenden Verbrennungsmotors 2 einzuspeisen.

Bei der Figur 4 ist in der Absperrstellung 32a des Rückschlagventils 32 eine Verbindung der Saugseite S mit dem Behälter 9 in Durchflussrichtung vom Behälter 9 zur Saugseite S während des Booster-Antriebs ermöglicht, wozu in einer das Rückschlagventil 32 umgehenden Bypassleitung 96 der Saugleitung S ein in Richtung zum Triebwerk 7 öffnendes Rückschlagventil 95 vorgesehen ist. Das Rückschlagventil 95 ermöglicht für den Booster-Antrieb ein Ansaugen von Druckmittel des von dem laufenden Verbrennungsmotors 2 angetriebenen Triebwerks 7 aus dem Behälter 9 bei in der Absperrstellung 32b befindlichem Rückschlagventil 32 vor Öffnen des Steuerventils 25 in die Durchflussstellung 25b für den Motorbetrieb des Triebwerks 7.

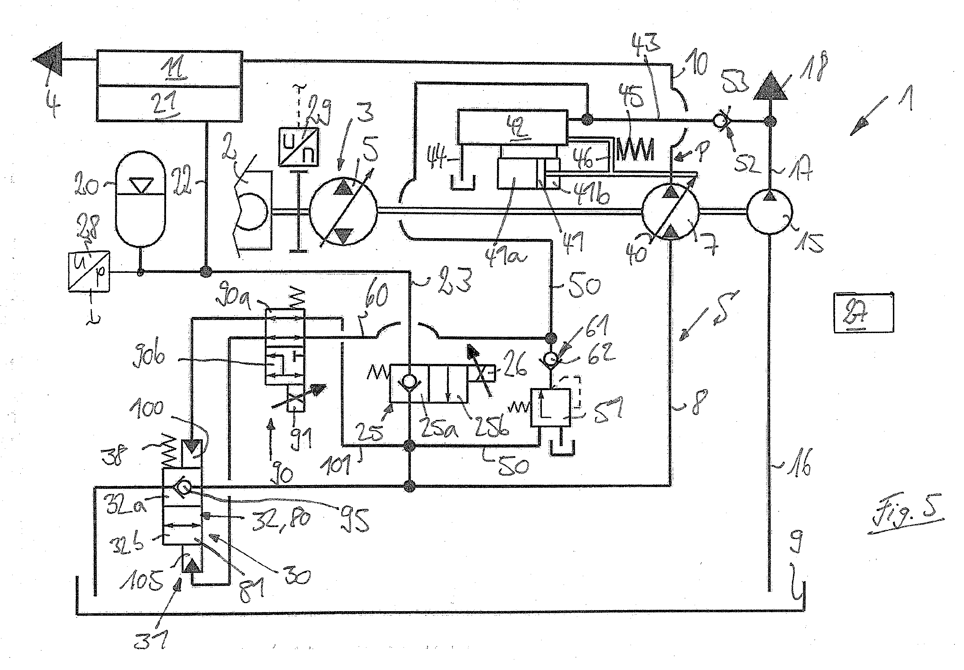

In der Figur 5 ist eine Weiterbildung der Figur 3 dargestellt, mit der durch das Umschaltventil 90 ein Booster-Antrieb durch das hydrostatische Triebwerk 7 zur Unterstützung des laufenden Verbrennungsmotors 2 ermöglicht wird.

Das Umschaltventil 90 steht mit der den Betätigungsdruck führenden Zweigleitung 60, der an die Verbindungsleitung 23 angeschlossenen Steuerdruckleitung 101 und den beiden Steuerdruckflächen 100, 105 in Verbindung. Das Umschaltventil 90 ist als Vier-Anschluss-Zwei-Stellungs-Ventil ausgeführt und mittels der elektrischen Betätigungseinrichtung 91 elektrisch betätigbar.

In der ersten Schaltstellung 90a des Umschaltventils 90 ist die Steuerdruckfläche 105 des Rückschlagventils 32 mit der Zweigleitung 60 verbunden und somit mit dem Betätigungsdruck beaufschlagt. Die weitere Steuerdruckfläche 100 des Rückschlagventils 32 ist in der ersten Schaltstellung 90a an die Steuerdruckleitung 101 angeschlossen und somit mit der Saugseite S zwischen dem Triebwerk 7 und dem Rückschlagventil 32 verbunden. In der Schaltstellung 90a des Umschaltventils 90 ergibt sich die bereits oben beschriebene Betätigung des Rückschlagventils 32 gemäß der Figur 3 für die Verwendung des Triebwerks 7 im Motorbetrieb als hydraulischer Starter im Rahmen einer Start-Stopp-Funktion des Verbrennungsmotors 2.

In der zweiten Schaltstellung 90b des Umschaltventils 90 sind die Steuerdruckfläche 105 und die weitere Steuerdruckfläche 100 des Rückschlagventile 32 an die Zweigleitung 60 angeschlossen und somit von dem Betätigungsdruck beaufschlagt. Die Steuerdruckleitung 101 ist in der zweiten Schaltstellung 90b des Umschaltventils 90 abgesperrt. Durch Betätigen des Umschaltventils 90 in die zweite Schaltstellung 90b wird somit das Rückschlagventil 32 von der Federeinrichtung 38 in die Absperrstellung 32a betätigt.

Für den Booster-Antrieb wird das Umschaltventil 90 in die Schaltstellung 90b betätigt, in der das Rückschlagventil 32 in die Absperrstellung 32a betätigt wird und die Verbindung der Saugleitung 8 in Strömungsrichtung zum Behälter 9 abgesperrt ist. Durch Ansteuerung des Schaltventils 25 in die Durchflussstellung 25b kann somit das Triebwerk 7 mit unter Druck stehendem Druckmittel aus dem Druckmittelspeicher 20 im Motorbetrieb angetrieben werden, um ein Drehmoment in den Antriebsstrang zur Unterstützung des laufenden Verbrennungsmotors 2 einzuspeisen.

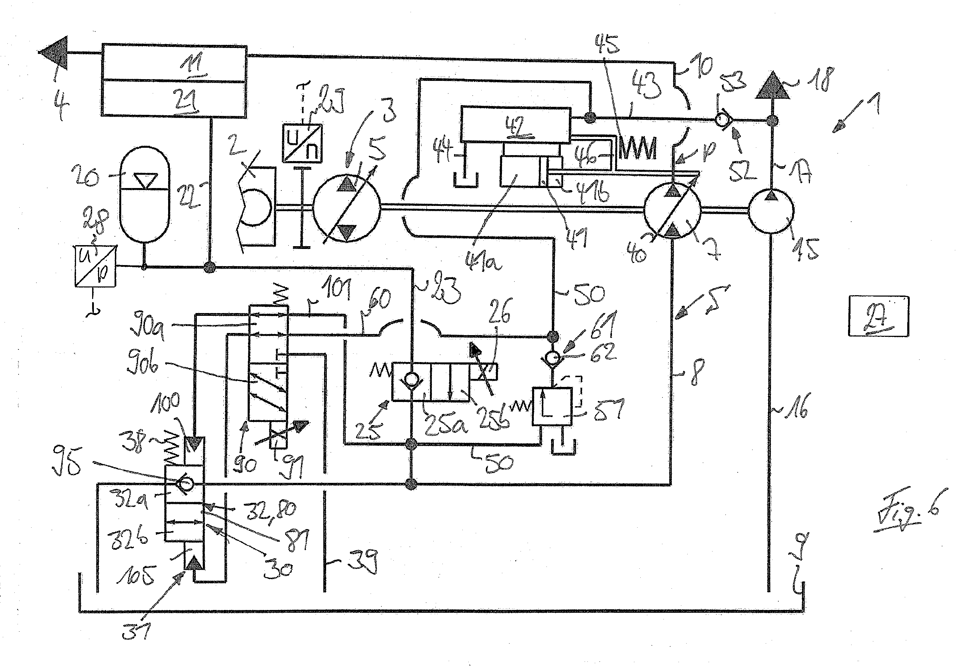

Die Figur 6 zeigt eine weitere Weiterbildung der Figur 3, die sich von der Figur 5 durch die Ausführung des Umschaltventils 90 unterscheidet.

Das Umschaltventil 90 der Figur 6 ist als Fünf-Anschluss-Zwei-Stellungs-Ventil ausgeführt, das mittels der elektrischen Betätigungseinrichtung 91 elektrisch betätigbar. Das Umschaltventil 90 steht mit der den Betätigungsdruck führenden Zweigleitung 60, der an die Verbindungsleitung 23 angeschlossenen Steuerdruckleitung 101, den beiden Steuerdruckflächen 100, 105 sowie der zu dem Behälter 9 geführten Entlastungsleitung 39 in Verbindung.

In der ersten Schaltstellung 90a des Umschaltventils 90 ist die Steuerdruckfläche 105 des Rückschlagventils 32 mit der Zweigleitung 60 verbunden und somit mit dem Betätigungsdruck beaufschlagt. Die weitere Steuerdruckfläche 100 des Rückschlagventils 32 ist in der ersten Schaltstellung 90a an die Steuerdruckleitung 101 angeschlossen und somit mit der Saugseite S zwischen dem Triebwerk 7 und dem Rückschlagventil 32 verbunden. Die Entlastungsleitung 39 ist abgesperrt. In der Schaltstellung 90a des Umschaltventils 90 ergibt sich die bereits oben beschriebene Betätigung des Rückschlagventils 32 gemäß der Figur 3 für die Verwendung des Triebwerks 7 im Motorbetrieb als hydraulischer Starter im Rahmen einer Start-Stopp-Funktion des Verbrennungsmotors 2.

In der zweiten Schaltstellung 90b des Umschaltventils 90 ist die Steuerdruckfläche 105 mit der Entlastungsleitung 39 verbunden und die weitere Steuerdruckfläche 100 an die Zweigleitung 60 angeschlossen und somit von dem Betätigungsdruck beaufschlagt. Die Steuerdruckleitung 101 ist abgesperrt. Durch Betätigen des Umschaltventils 90 in die zweite Schaltstellung 90b wird somit das Rückschlagventil 32 von der Federeinrichtung 38 und dem an der weiteren Steuerdruckfläche 100 anstehenden Speisedruck in die Absperrstellung 32a betätigt.

Für den Booster-Antrieb wird das Umschaltventil 90 in die Schaltstellung 90b betätigt, in der das Rückschlagventil 32 in die Absperrstellung 32a betätigt wird und die Verbindung der Saugleitung 8 in Strömungsrichtung zum Behälter 9 abgesperrt ist. Durch Ansteuerung des Schaltventils 25 in die Durchflussstellung 25b kann somit das Triebwerk 7 mit unter Druck stehendem Druckmittel aus dem Druckmittelspeicher 20 im Motorbetrieb angetrieben werden, um ein Drehmoment in den Antriebsstrang zur Unterstützung des laufenden Verbrennungsmotors 2 einzuspeisen.

Bei den Figuren 5 und 6 ist in der Absperrstellung 32a des Rückschlagventils 32 eine Verbindung der Saugseite S mit dem Behälter 9 in Durchflussrichtung vom Behälter 9 zur Saugseite S während des Booster-Antriebs ermöglicht, wozu in der Absperrstellung 32a das in Richtung zum Triebwerk 7 öffnende Rückschlagventil 95 vorgesehen ist.

Die Erfindung weist eine Reihe von Vorteilen auf:
Das erfindungsgemäße, aktiv mittels der Betätigungseinrichtung 31 steuerbare und durch den Betätigungsdruck hydrostatisch betätigbare Rückschlagventil 32 ermöglicht es, das bereits vorhandene und zur Versorgung des Arbeitshydrauliksystems 4 im Pumpenbetrieb dienende hydrostatische Triebwerk 7 zusätzlich im Motorbetrieb als hydraulischen Starter für den Verbrennungsmotor 2 und/oder als Booster-Antrieb zur Unterstützung des laufenden Verbrennungsmotors 2, beispielsweise im Fahrbetrieb, zu betreiben, ohne im Pumpenbetrieb zusätzliche hydraulische Strömungswiderstände in der Saugseite S aufzubauen, die die Sauggrenzdrehzahl im Pumpenbetrieb des Triebwerks 7 herabsetzen.

Die als Stellkolben 36 bzw. als Steuerdruckfläche 105 ausgebildete Betätigungseinrichtung 31 wird durch den als Speisedruck des von der Speisepumpe 15 versorgten Speisedruckkreises 18 bzw. den über das Druckminderventil 51 bereitgestellten Druck des Druckmittelspeichers 20 ausgeführten Betätigungsdruck in Richtung der Öffnungsstellung 32b des Rückschlagventils 32 beaufschlagt, so dass bei laufendem Verbrennungsmotor 2 das Rückschlagventil 32 in die Öffnungsstellung 32b betätigt wird. Bei abgestelltem Verbrennungsmotor 2 und somit zusammenbrechendem Speisedruck sowie in der Sperrstellung 25a befindlichem Steuerventil 25 wird das Rückschlagventil 32 von der Federeinrichtung 38 in die Absperrstellung 32a betätigt und von der Federeinrichtung 38 in der Absperrstellung 32a gehalten. Bei abgestelltem Verbrennungsmotor 2 befindet sich somit das Rückschlagventil 32 automatisch in der Absperrstellung 32a, so dass bei einer Start-Stopp-Funktion durch Ansteuerung des Steuerventils 25 in die Durchflussstellung 25b unmittelbar und direkt ein hydrostatischer Start des Verbrennungsmotors 2 durch den Motorbetrieb des Triebwerks 7 erfolgen kann ohne zeitlich vorher das Rückschlagventil 32 in die Absperrstellung 32a betätigen zu müssen. Die Funktion des Rückschlagventil 32 bei einer Start-Stopp-Funktion und Verwendung des Triebwerks 7 als hydraulischen Starter des Verbrennungsmotors 2 kann somit ohne zusätzliche Steuerlogik und zusätzliche Steuerventile zur Ansteuerung der Betätigungseinrichtung 31 erzielt werden.

Mit dem Umschaltventil 90 gemäß den Figuren 4 bis 6 kann bei einer Rückschlagventileinrichtung 30 der Figuren 1 bis 3 auf einfache Weise die Ansteuerung des Rückschlagventils 32 in der Funktion umgeschaltet werden, um bei laufendem Verbrennungsmotor 2 durch das Betätigen des Rückschlagventils 32 in die Absperrstellung 32a durch den als konstanten Speisedruck ausgeführten Betätigungsdruck einen Motorbetrieb des Triebwerks 7 zur Abgabe eines Drehmoments an die Abtriebswelle 6 für einen Booster-Antrieb zu erzeugen.

Die Erfindung ist nicht auf die dargestellten Ausführungsbeispiele beschränkt.

Das Rückschlagventil 32 kann als Kolbenschieberventil mit einem verdrehbaren Kolben oder als Kugelhahn mit einer verdrehbaren Kugel ausgebildet sein, wobei der Kolben bzw. die Kugel mit der Betätigungseinrichtung 31 in Wirkverbindung steht und mittels der als Stellkolben 36 bzw. als Steuerdruckfläche 105 ausgebildeten Betätigungseinrichtung 31 aktiv zwischen einer Absperrstellung und einer Öffnungsstellung verdreht wird.

Das hydrostatische Triebwerk 7 kann alternativ zu der Ausführung als Axialkolbenmaschine als Zahnradmaschine, als Radialkolbenmaschine oder jedwede andere gängige Bauweise ausgeführt sein, jeweils mit konstantem Verdrängervolumen oder alternativ stufenlos verstellbarem Verdrängervolumen.

Zudem ist die Erfindung nicht auf die dargestellte Reihenfolge der Anordnung des Fahrantriebs 3, des hydrostatischen Triebwerks 7 und der Speisepumpe 15 an der Abtriebswelle 6 des Verbrennungsmotor 2 beschränkt, sondern deren Anordnung kann beliebig variiert und verändert werden.

## Patentansprüche

1. Rückschlagventileinrichtung (30) eines hydrostatischen Triebwerks (7), das mit einem Verbrennungsmotor (2) trieblich verbunden ist und als Pumpe und Motor betreibbar ist, wobei das Triebwerk (7) im Pumpenbetrieb mit einer Saugseite (S) Druckmittel aus einem Behälter (9) ansaugt und in Förderseite (P) fördert und wobei das Triebwerk (7) im Motorbetrieb von über die Saugseite (S), die mit dem Behälter (9) in Verbindung steht, zugeführtem und unter Druck stehendem Druckmittel aus einem Druckmittelspeicher (20) angetrieben ist, wobei die Rückschlagventileinrichtung (30) in der Saugseite (S) des hydrostatischen Triebwerks (7) angeordnet ist, um im Motorbetrieb einen Druckaufbau an der Saugseite (S) zu erzielen, **dadurch gekennzeichnet, dass** die Rückschlagventileinrichtung (30) ein mittels einer Betätigungseinrichtung (31) betätigbares Rückschlagventil (32) aufweist, wobei mittels der Betätigungseinrichtung (31) das Rückschlagventil (32) aktiv zwischen einer Absperrstellung (32a), in der eine Verbindung der Saugseite (S) mit dem Behälter (9) in Durchflussrichtung von der Saugseite (S) zum Behälter (9) absperrt ist, und einer Öffnungsstellung (32b) betätigbar ist, in der die Verbindung der Saugseite (S) mit dem Behälter (9) geöffnet ist.

2. Rückschlagventileinrichtung nach Anspruch 1, **dadurch gekennzeichnet, dass** das Rückschlagventil (32) mittels der Betätigungseinrichtung (31) im Pumpenbetrieb des Triebwerks (7) in die Öffnungsstellung (32b) und im Motorbetrieb des Triebwerks (7) in die Absperrstellung (32a) betätigbar ist.

3. Rückschlagventileinrichtung nach Anspruch 1 oder 2, **dadurch gekennzeichnet, dass** das Rückschlagventil (32) mittels einer Federeinrichtung (38) in die Absperrstellung (32a) betätigbar ist und das Rückschlagventil (32) durch einen die Betätigungseinrichtung (31) beaufschlagenden hydraulischen Betätigungsdruck in die Öffnungsstellung (32b) betätigbar ist.

4. Rückschlagventileinrichtung nach einem der Ansprüche 1 bis 3, **dadurch gekennzeichnet, dass** das in der Absperrstellung (32a) befindliche Rückschlagventil (32) von dem in der Saugseite (S) anstehenden Druck des Druckmittelspeichers (20) in die Absperrstellung (32a) beaufschlagt ist.

5. Rückschlagventileinrichtung nach einem der Ansprüche 1 bis 4, **dadurch gekennzeichnet, dass** die Betätigungseinrichtung (31) als mit dem Rückschlagventil (32) in Wirkverbindung stehender Stellkolben (36) ausgebildet ist.

6. Rückschlagventileinrichtung nach Anspruch 5, **dadurch gekennzeichnet, dass** der Stellkolben (36) von der Federeinrichtung (38) beaufschlagt ist und einen mit dem Betätigungsdruck beaufschlagbaren Kolbendruckraum (36b) aufweist, der der Federeinrichtung (38) entgegenwirkt.

7. Rückschlagventileinrichtung nach Anspruch 6, **dadurch gekennzeichnet, dass** die Federeinrichtung (38) in einem federseitigen Kolbendruckraum (36a) des Stellkolbens (36) angeordnet ist, der mit dem Behälter (9) verbindbar ist.

8. Rückschlagventileinrichtung nach einem der Ansprüche 1 bis 4, **dadurch gekennzeichnet, dass** die Betätigungseinrichtung (31) als an dem Rückschlagventil (32) angeordnete, von dem hydraulischen Betätigungsdruck beaufschlagbare Steuerdruckfläche (105) ausgebildet ist, die das Rückschlagventil (32) in Richtung der Öffnungsstellung (32b) betätigt.

9. Rückschlagventileinrichtung nach einem der Ansprüche 1 bis 8, **dadurch gekennzeichnet, dass** das Rückschlagventil (32) als Klappenventil (33) mit einer verschwenkbaren Klappe (34) ausgebildet ist, die mit der Betätigungseinrichtung (31) in Wirkverbindung steht.

10. Rückschlagventileinrichtung nach Anspruch 9, **dadurch gekennzeichnet, dass** der Stellkolben (36) unter Zwischenschaltung einer gelenkig an der Klappe (34) und an dem Stellkoben (36) angelenkten Koppelstange (37), insbesondere einer Schwinge, mit der Klappe (34) in Wirkverbindung steht.

11. Rückschlagventileinrichtung nach Anspruch 9, **dadurch gekennzeichnet, dass** der Stellkolben (36) direkt mit der Klappe (34) gelenkig verbunden ist, wobei die Gelenkverbindung ein Langloch umfasst.

12. Rückschlagventileinrichtung nach einem der Ansprüche 9 bis 11, **dadurch gekennzeichnet, dass** die Klappe (34) derart in einem Saugkanal schwenkbar angeordnet ist, dass die Klappe (34) in der Öffnungsstellung (32b) nicht in den Saugkanal eintaucht.

13. Rückschlagventileinrichtung nach einem der Ansprüche 1 bis 8, **dadurch gekennzeichnet, dass** das Rückschlagventil (32) als Flachschieberventil (80) mit einem längsverschiebbaren Schieber (81) ausgebildet ist, der mit der Betätigungseinrichtung (31) in Wirkverbindung steht.

14. Rückschlagventileinrichtung nach einem der Ansprüche 1 bis 8, **dadurch gekennzeichnet, dass** das Rückschlagventil (32) als Kolbenschieberventil mit einem längsverschiebbaren oder verdrehbaren Kolben ausgebildet ist, der mit der Betätigungseinrichtung (31) in Wirkverbindung steht.

15. Rückschlagventileinrichtung nach einem der Ansprüche 1 bis 8, **dadurch gekennzeichnet, dass** das Rückschlagventil (32) als Kugelhahn mit einer verdrehbaren Kugel ausgebildet ist, die mit der Betätigungseinrichtung (31) in Wirkverbindung steht.

16. Hydrostatisches Triebwerk (7), das mit einem Verbrennungsmotor (2) trieblich verbunden ist und als Pumpe und Motor betreibbar ist, wobei das Triebwerk (7) im Pumpenbetrieb mit einer Saugseite (S) Druckmittel aus einem Behälter (9) ansaugt und in Förderseite (P) fördert und wobei das Triebwerk (7) im Motorbetrieb von über die Saugseite (S), die mit dem Behälter (9) in Verbindung steht, zugeführtem und unter Druck stehendem Druckmittel aus einem Druckmittelspeicher (20) angetrieben ist, wobei eine Rückschlagventileinrichtung (30) gemäß einem der Ansprüche 1 bis 15 in der Saugseite (S) des hydrostatischen Triebwerks (7) angeordnet ist.

17. Hydrostatisches Triebwerk nach Anspruch 16, **dadurch gekennzeichnet, dass** die Saugseite (S) des hydrostatischen Triebwerks (7) als Saugkanal oder Saugleitung ausgebildet ist.

18. Hydrostatisches Triebwerk nach Anspruch 16 oder 17, **dadurch gekennzeichnet, dass** die Rückschlagventileinrichtung (30) in ein Gehäuse des Triebwerks (7) eingebaut ist.

19. Hydrostatisches Triebwerk nach Anspruch 16 oder 17, **dadurch gekennzeichnet, dass** die Rückschlagventileinrichtung (30) ein eigenständiges Gehäuse (70) aufweist.

20. Hydrostatisches Triebwerk nach Anspruch 19, **dadurch gekennzeichnet, dass** das Gehäuse (70) der Rückschlagventileinrichtung (30) an das Gehäuse des Triebwerks (7) angeflanscht ist.

21. Hydrostatisches Triebwerk nach einem der Ansprüche 16 bis 20, **dadurch gekennzeichnet, dass** zur Steuerung der Verbindung des Druckmittelspeichers (20) mit der Saugseite (S) des Triebwerks (7) für den Motorbetrieb ein Steuerventil (25) vorgesehen ist.

22. Hydrostatisches Triebwerk nach einem der Ansprüche 16 bis 21, **dadurch gekennzeichnet, dass** das Triebwerk (7) als im Verdrängervolumen konstantes Konstanttriebwerk ausgebildet ist.

23. Hydrostatisches Triebwerk nach einem der Ansprüche 16 bis 21, **dadurch gekennzeichnet, dass** das Triebwerk (7) als im Verdrängervolumen verstellbareres Verstelltriebwerk ausgebildet ist, wobei das Verdrängervolumen mittels einer Verdrängervolumenstelleinrichtung (40) einstellbar ist, die mittels einer Stelleinrichtung (42) betätigbar ist, wobei die Stelleinrichtung (42) zur Versorgung mit Druckmittel an einen Speisedruckkreis (18) angeschlossen und mit dem Druckmittelspeicher (20) verbindbar ist.

24. Hydrostatisches Triebwerk nach Anspruch 23, **dadurch gekennzeichnet, dass** in der Verbindung der Stelleinrichtung (42) mit dem Speisedruckkreis (18) ein Sperrventil (52), insbesondere ein in Richtung zum Speisedruckkreis (18) sperrendes Rückschlagventil (53), angeordnet ist.

25. Hydrostatisches Triebwerk nach Anspruch 23 oder 24, **dadurch gekennzeichnet, dass** der Druckmittelspeicher (20) mit der Saugseite (S) des Triebwerks (7) mittels einer Verbindungsleitung (23) in Verbindung steht, in der das Steuerventil (25) angeordnet ist, wobei zur Versorgung der Stelleinrichtung (42) mit Druckmittel aus dem Druckmittelspeicher (20) eine Druckmittelleitung (50) vorgesehen ist, die zwischen dem Steuerventil (25) und der Saugseite (S) des Triebwerks (7) an die Verbindungsleitung (23) angeschlossen ist.

26. Hydrostatisches Triebwerk nach Anspruch 25, **dadurch gekennzeichnet, dass** die Druckmittelleitung (50) an eine von dem Speisedruckkreis (18) zu der Stelleinrichtung (42) geführte Stelldruckleitung (43) angeschlossen ist, in der das Sperrventil (52) angeordnet ist, wobei die Druckmittelleitung (50) zwischen dem Sperrventil (52) und der Stelleinrichtung (42) an die Stelldruckleitung (43) angeschlossen ist.

27. Hydrostatisches Triebwerk nach Anspruch 25 oder 26, **dadurch gekennzeichnet, dass** in der Druckmittelleitung (50) ein Druckminderventil (51) angeordnet ist.

28. Hydrostatisches Triebwerk nach einem der Ansprüche 16 bis 27, **dadurch gekennzeichnet, dass** der Speisedruck eines Speisedruckkreises (18) als Betätigungsdruck der Betätigungseinrichtung (31) des Rückschlagventils (32) ausgebildet ist.

29. Hydrostatisches Triebwerk nach Anspruch 27 oder 28, **dadurch gekennzeichnet, dass** eine von der Druckmittelleitung (50) zu der Betätigungseinrichtung (31) geführte Zweigleitung (60) vorgesehen ist, wobei zwischen dem Druckminderventil (51) und dem Anschluss der Zweigleitung (60) ein Sperrventil (61), insbesondere ein in Richtung zum Druckminderventil (51) sperrendes Rückschlagventil (62), angeordnet ist.

30. Hydrostatisches Triebwerk nach Anspruch 28 oder 29, **dadurch gekennzeichnet, dass** der Kolbendruckraum (36b) des Stellkolbens (36) mit dem Speisedruckkreis (18) verbunden ist und der federseitige Kolbendruckraum (36a) des Stellkolbens (36a) zu dem Behälter (9) entlastet ist.

31. Hydrostatisches Triebwerk nach Anspruch 28 oder 29, **dadurch gekennzeichnet, dass** die Steuerdruckfläche (105) des Rückschlagventils (32) mit dem Speisedruckkreis (18) verbunden ist und eine weitere Steuerdruckfläche (100) an dem Rückschlagventil (32) ausgebildet ist, die das Rückschlagventil (32) in Richtung der Absperrstellung (32b) betätigt, wobei die weitere Steuerdruckfläche (100) zur Druckbeaufschlagung mit der Saugseite (S) zwischen dem Triebwerk (7) und dem Rückschlagventil (32) verbindbar ist.

32. Hydrostatisches Triebwerk nach einem der Ansprüche 16 bis 31, **dadurch gekennzeichnet, dass** zur Steuerung der Beaufschlagung der Betätigungseinrichtung (31) ein Umschaltventil (90) vorgesehen ist, mittels dem in einer ersten Schaltstellung (90a) das Rückschlagventil (32) in Abhängigkeit von dem Betätigungsdruck in die Öffnungsstellung (32b) betätigbar ist und mittels dem in einer zweiten Schaltstellung (90b) das Rückschlagventil (32) in die Absperrstellung (32a) betätigbar ist.

33. Hydrostatisches Triebwerk nach Anspruch 32, **dadurch gekennzeichnet, dass** in der ersten Schaltstellung (90a) des Umschaltventils (90) der Kolbendruckraum (36b) des Stellkolbens (36) mit dem Betätigungsdruck beaufschlagt ist und der federseitige Kolbendruckraum (36a) zu dem Behälter (9) entlastet ist und in der zweiten Schaltstellung (90b) des Umschaltventils (90) der federseitige Kolbendruckraum (36a) des Stellkolbens (36) mit dem Betätigungsdruck beaufschlagt ist und der Kolbendruckraum (36b) zu dem Behälter (9) entlastet ist.

34. Hydrostatisches Triebwerk nach Anspruch 32, **dadurch gekennzeichnet, dass** in der ersten Schaltstellung (90a) des Umschaltventils (90) die Steuerdruckfläche (105) des Rückschlagventils (32) mit dem Betätigungsdruck beaufschlagt ist und die weitere Steuerdruckfläche (100) des Rückschlagventils (32) mit der Saugseite (S) zwischen dem Triebwerk (7) und dem Rückschlagventil (32) verbunden ist.

35. Hydrostatisches Triebwerk nach Anspruch 34, **dadurch gekennzeichnet, dass** in der zweiten Schaltstellung (90b) des Umschaltventils (90) die Steuerdruckfläche (105) und die weitere Steuerdruckfläche (100) des Rückschlagventils (32) mit dem Betätigungsdruck beaufschlagt sind.

36. Hydrostatisches Triebwerk nach Anspruch 34, **dadurch gekennzeichnet, dass** in der zweiten Schaltstellung (90b) des Umschaltventils (90) die Steuerdruckfläche (105) zu einem Behälter (9) entlastet ist und die weitere Steuerdruckfläche (100) mit dem Betätigungsdruck beaufschlagt ist.

37. Hydrostatisches Triebwerk nach einem der Ansprüche 32 bis 36, **dadurch gekennzeichnet, dass** in der Absperrstellung (32a) des Rückschlagventils (32) eine Verbindung der Saugseite (S) mit dem Behälter (9) in Durchflussrichtung vom Behälter (9) zur Saugseite (S) ermöglicht ist.

38. Hydrostatisches Triebwerk nach einem der Ansprüche 21 bis 37, **dadurch gekennzeichnet, dass** das Steuerventil (25) und/oder das Druckminderventil (51) und/oder das Umschaltventil (90) in dem Gehäuse (70) der Rückschlagventileinrichtung (30) angeordnet ist.

39. Hydrostatisches Triebwerk nach einem der Ansprüche 21 bis 38, **dadurch gekennzeichnet, dass** das Steuerventil (25) und/oder das Umschaltventil (90) elektrisch betätigbar sind und zur Ansteuerung mit einer elektronischen Steuereinrichtung (27) in Wirkverbindung stehen.

40. Hydrostatisches Triebwerk nach Anspruch 39, **dadurch gekennzeichnet, dass** die elektronische Steuereinrichtung (27) mit einer die Drehzahl des Verbrennungsmotors (2) erfassenden Sensoreinrichtung (29) und/oder einer den Druck des Druckmittelspeichers (20) erfassenden Sensoreinrichtung (28) in Verbindung steht.

41. Hydrostatisches Antriebssystem (1) mit einem hydrostatischen Triebwerk (7) nach einem der Ansprüche 16 bis 40, das mit einem Verbrennungsmotor (2) trieblich verbunden ist, wobei das hydrostatische Triebwerk (7) bei gleicher Drehrichtung als Pumpe und Motor betreibbar ist, im Pumpenbetrieb das Triebwerk (7) zur Versorgung zumindest eines Verbrauchers, insbesondere eines Arbeitshydrauliksystems (4), dient, und im Motorbetrieb als hydraulischer Starter einer Start-Stopp-Funktion des Verbrennungsmotor (2) und/oder als hydraulischer Booster-Antrieb bei laufendem Verbrennungsmotor (2) dient.

42. Hydrostatisches Antriebssystem nach Anspruch 41, **dadurch gekennzeichnet, dass** für die Start-Stopp-Funktion des Verbrennungsmotor (2) bei abgestelltem Verbrennungsmotor (2) das Rückschlagventil (32) mittels der Federeinrichtung (38) in die Absperrstellung (32a) betätigt ist und nach dem Startvorgang des Verbrennungsmotor (2) durch den Motorbetrieb des hydrostatischen Triebwerks (7) das Rückschlagventil (32) durch den an der Betätigungseinrichtung (31) anstehenden, bei laufendem Verbrennungsmotor (2) erzeugten hydraulischen Betätigungsdruck in die Öffnungsstellung (32b) betätigbar ist.

43. Hydrostatisches Antriebssystem nach Anspruch 41 oder 42, **dadurch gekennzeichnet, dass** für den Booster-Antrieb bei laufendem Verbrennungsmotor (2) das Rückschlagventil (32) durch den hydraulischen Betätigungsdruck für die Dauer des Booster-Antriebs in die Absperrstellung (32a) betätigbar ist.

44. Fahrzeug, insbesondere mobile Arbeitsmaschine mit einem hydrostatischen Antriebssystem nach einem der Ansprüche 41 bis 43.
